(19) **Europäisches Patentamt / European Patent Office / Office européen des brevets**

(11) **EP 4 073 140 B1**

(12) # EUROPÄISCHE PATENTSCHRIFT

(45) Veröffentlichungstag und Bekanntmachung des Hinweises auf die Patenterteilung:
**31.01.2024 Patentblatt 2024/05**

(21) Anmeldenummer: **20807389.0**

(22) Anmeldetag: **17.11.2020**

(51) Internationale Patentklassifikation (IPC):
**C08G 63/181** *(2006.01)* **B29C 64/153** *(2017.01)*
**B33Y 70/00** *(2020.01)* **C08L 67/02** *(2006.01)*

(52) Gemeinsame Patentklassifikation (CPC):
(C-Sets verfügbar)
**C08G 63/181; B33Y 70/00; C08L 67/02** (Forts.)

(86) Internationale Anmeldenummer:
**PCT/EP2020/082408**

(87) Internationale Veröffentlichungsnummer:
**WO 2021/115739 (17.06.2021 Gazette 2021/24)**

(54) **SINTERPULVER (SP) ENTHALTEND EINEN TEILKRISTALLINEN TEREPHTHALAT-POLYESTER**

SINTER POWDER (SP) CONTAINING A PARTIALLY CRYSTALLINE TEREPHTHALATE POLYESTER

POUDRE DE FRITTAGE (SP) CONTENANT UN POLYESTER TÉRÉPHTALATE PARTIELLEMENT CRISTALLIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2019 EP 19215327**

(43) Veröffentlichungstag der Anmeldung:
**19.10.2022 Patentblatt 2022/42**

(73) Patentinhaber: **BASF SE**
**67056 Ludwigshafen am Rhein (DE)**

(72) Erfinder:
• **GABRIEL, Claus**
**67056 Ludwigshafen (DE)**
• **KOPPING, Jordan Thomas**
**67056 Ludwigshafen (DE)**
• **MEIER, Thomas**
**67056 Ludwigshafen (DE)**
• **GUBBELS, Erik**
**67056 Ludwigshafen (DE)**
• **LOHWASSER, Ruth**
**67056 Ludwigshafen (DE)**
• **KNIESEL, Simon**
**67056 Ludwigshafen (DE)**

(74) Vertreter: **BASF IP Association**
**BASF SE**
**GBI-C006**
**67056 Ludwigshafen (DE)**

(56) Entgegenhaltungen:
**WO-A1-2019/177850 US-A1- 2010 160 547**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08L 67/02, C08K 3/013, C08L 67/04**

**Beschreibung**

Die vorliegende Erfindung betrifft ein Sinterpulver (SP), das mindestens einen teilkristallinen Terephthalat-Polyester (A) enthält, der hergestellt wird durch Umsetzung mindestens einer aromatischen Dicarbonsäure (a) und mindestens zweier aliphatischer Diole (b1) und (b2), wobei das aliphatische Diol (b1) Neopentylglycol ist und das aliphatische Diol (b2) ein lineares Diol gemäß der allgemeinen Formel $HO-(CH_2)_n-OH$ ist, in der n 2, 3, 4, 5 oder 6 bedeutet. Das molare Verhältnis der Komponente (a) zu der Komponente (b1) bei der Herstellung des mindestens einen teilkristallinen Terephthalat-Polyesters (A) liegt im Bereich von 1 : 0,15 bis 1 : 0,65 [mol/mol]. Darüber hinaus betrifft die vorliegende Erfindung ein Verfahren zur Herstellung des Sinterpulvers (SP) sowie ein Verfahren zur Herstellung eines Formkörpers durch Sintern des Sinterpulvers (SP). Des Weiteren betrifft die vorliegende Erfindung den Formkörper, der durch das Sintern erhältlich ist. Die vorliegende Erfindung betrifft außerdem die Verwendung des Sinterpulvers (SP) in einem Sinterverfahren.

Die schnelle Bereitstellung von Prototypen ist eine in der jüngsten Zeit häufig gestellte Aufgabe. Ein Verfahren, das für dieses sogenannte "rapid prototyping" besonders geeignet ist, ist das selektive Lasersintern (SLS). Dabei wird ein Kunststoffpulver in einer Kammer selektiv mit einem Laserstrahl belichtet. Das Pulver schmilzt auf, die geschmolzenen Partikel laufen ineinander und erstarren wieder. Wiederholtes Aufbringen von Kunststoffpulver und anschließendes Belichten mit einem Laser ermöglicht die Modellierung von dreidimensionalen Formkörpern.

Das Verfahren des selektiven Lasersinterns zur Herstellung von Formkörpern aus pulverförmigen Polymeren wird ausführlich in den Patentschriften US 6,136,948 und WO 96/06881 beschrieben.

Neue Varianten des selektiven Lasersinterns sind das High-Speed Sintern (HSS) oder die sogenannte Multijet Fusion Technologie (MJF) von HP. Bei diesen wird durch Aufsprühen einer infrarotabsorbierenden Tinte auf den zu versinternden Bauteilquerschnitt und anschließendes Aufschmelzen mit einem Infrarotstrahler eine höhere Verarbeitungsgeschwindigkeit, verglichen mit dem selektiven Lasersintern, erzielt.

Von besonderer Bedeutung beim High-Speed Sintern bzw. der Multijet Fusion Technologie als auch beim selektiven Lasersintern ist das Sinterfenster des Sinterpulvers. Dieses sollte möglichst breit sein, um einen Verzug von Bauteilen beim Lasersintern zu reduzieren. Aus diesem Grund ist insbesondere die Verarbeitung von teilkristallinen Terephthalat-Polyester basierten Sinterpulvern häufig schwierig, da teilkristalline Terephthalat-Polyester ein enges Sinterfenster aufweisen und sehr schnell kristallisieren, so dass häufig Bauteile mit einem starken Verzug erhalten werden.

Ein weiterer wichtiger Punkt beim High-Speed Sintern bzw. der Multijet Fusion Technologie als auch beim selektiven Lasersintern ist die Höhe der Schmelztemperatur des Sinterpulvers. Diese sollte nicht mehr als 200°C betragen, um zum einen den Energiebedarf beim Sintern möglichst gering zu halten und zum anderen die Sinterfähigkeit des Sinterpulvers auf Standard-Lasersinteranlagen, die eine maximale Bauraumtemperatur von etwa 200°C aufweisen, zu gewährleisten. Da beispielsweise reines Polybutylenterephthalat (PBT) eine Schmelztemperatur von circa 220°C aufweist, ist die Verarbeitung von reinen Polybutylenterephthalat-Pulvern auf Standard-Lasersinteranlagen in der Regel sehr schwierig. Das gleiche gilt beispielsweise auch für reine Polyethylenterephthalat (PET)-Pulver, da reines Polyethylenterephthalat ebenfalls eine hohe Schmelztemperatur von mehr als 250°C aufweist.

Zur Verbreiterung des Sinterfensters und/oder zur Absenkung der Schmelztemperatur werden die auf teilkristallinen Terephthalat-Polyestern basierten Sinterpulver daher üblicherweise mit weiteren, vorzugsweise amorphen, Polymerpulvern, gemischt oder es werden Sinterpulver, die auf Terephthalat-Copolymeren basieren, eingesetzt. Allerdings weisen die bisher aus diesen Sinterpulvern hergestellten Formkörper häufig unzureichende mechanische Eigenschaften wie beispielsweise ein zu niedriges Zug-E-Modul oder eine zu niedrige Zugfestigkeit auf.

In dem Artikel "Production and Processing of a spherical polybutylene terephthalate powder for laser sintering" von Rob G. Kleijnen, Manfred Schmid und Konrad Wegener (Applied Sciences, 2019, 9, 1308) wird die Herstellung eines sphärischen PBT-Pulvers und seine Verwendung in einem selektiven Lasersinterprozess beschrieben. Die aus dem PBT-Pulver hergestellten Formkörper zeigen einen starken Verzug sowie unzureichende mechanische Eigenschaften wie ein geringes Zug-E-Modul, eine geringe Bruchdehnung sowie eine geringe Zugfestigkeit.

In dem Artikel "Comparison of crystallization characteristics and mechanical properties of poly(butylene terephthalate) processed by laser sintering and injection molding" von S. Arai et al. (Materials and Design, 2017, 113, 214) wird die Herstellung eines Pulvers aus einem PBT-Copolymer, das 10 mol-% Isophthalsäure enthält, beschrieben. Das Pulver weist eine Schmelztemperatur von etwa 208°C auf und kann in einem selektiven Sinterprozess bei einer Pulverbett-Temperatur von 190°C zu Formkörpern gesintert werden.

Die US 2015/0259530 offenbart eine Zusammensetzung, die einen teilkristallinen PET-Copolyester, ein Glykolmodifiziertes amorphes PET sowie einen Schlagzähmodifizierer enthält, zur Verwendung in einem Sinterverfahren.

Die US 8,247,492 beschreibt sinterfähige Pulverzusammensetzungen, die einen teilkristallinen aromatischen Polyester sowie einen amorphen aromatischen Polyester enthalten. Der teilkristalline aromatische Polyester wird durch Umsetzung von Terephthalsäure, Isophthalsäure, 1,4-Butandiol und 1,3-Propandiol hergestellt, der amorphe aromatische Polyester wird durch Umsetzung von Terephthalsäure, Isophthalsäure und Ethylenglycol hergestellt. Die Pulverzusammensetzungen weisen Schmelztemperaturen im Bereich von 145 bis 150 °C auf und können zu Formkörpern mit einem E-Modul von 1000 MPa und einer Zugfestigkeit von 20 MPa gesintert werden.

Die WO 2019/177850 beschreibt ein Baumaterial für additive Fertigungsanwendungen, umfassend eine Bauzusammensetzung in Pulverform, wobei die Bauzusammensetzung ein teilkristallines Polymer umfasst. Das teilkristalline Polymer kann ein Polyester oder Copolyester sein und Terephthalsäurereste sowie als Glykolrest Neopentylglykol enthalten.

Nachteilig bei den im Stand der Technik beschriebenen teilkristallinen Terephthalat-Polyester basierten Sinterpulvern zur Herstellung von Formkörpern durch selektives Lasersintern ist, dass das Sinterfenster der Sinterpulver häufig nicht ausreichend breit ist, so dass sich die Formkörper während der Herstellung durch selektives Lasersintern häufig verziehen. Durch diesen Verzug ist eine Verwendung oder Weiterverarbeitung der Formkörper nahezu ausgeschlossen. Der Verzug kann bereits während der Herstellung der Formkörper so stark sein, dass ein weiterer Schichtauftrag nicht möglich ist und daher der Herstellungsprozess abgebrochen werden muss. Werden Formkörper aus Sinterpulvern hergestellt, die neben dem teilkristallinen Terephthalat-Polyester noch ein weiteres Polymer enthalten, oder die den Terephthalat-Polyester in Form eines Copolymers enthalten, weisen diese Formkörper häufig nicht zufriedenstellende mechanischen Eigenschaften wie ein geringes Zug-E-Modul und/oder eine geringe Zugfestigkeit auf.

Die der vorliegenden Erfindung zugrunde liegende Aufgabe besteht somit darin, ein Sinterpulver bereit zu stellen, das in einem Verfahren zur Herstellung von Formkörpern durch Lasersintern die vorgenannten Nachteile der im Stand der Technik beschriebenen Sinterpulver und Verfahren nicht oder nur in geringem Maße aufweist. Das Sinterpulver und das Verfahren sollen möglichst einfach und kostengünstig herstellbar bzw. durchführbar sein.

Gelöst wird diese Aufgabe durch ein Sinterpulver (SP) enthaltend die nachfolgenden Komponenten (A) sowie gegebenenfalls (B), (C) und/oder (D):

(A) mindestens einen teilkristallinen Terephthalat-Polyester, der hergestellt wird durch Umsetzung mindestens der Komponenten (a) und (b):

(a) mindestens einer aromatischen Dicarbonsäure und

(b) mindestens zweier aliphatischer Diole (b1) und (b2), wobei das aliphatische Diol (b1) Neopentylglycol ist,

(B) gegebenenfalls mindestens ein weiteres Polymer,

(C) gegebenenfalls mindestens ein Additiv und/oder

(D) gegebenenfalls mindestens ein Verstärkungsmittel, wobei

das molare Verhältnis der Komponente (a) zu der Komponente (b1) bei der Herstellung des mindestens einen teilkristallinen Terephthalat-Polyesters (A) im Bereich von 1 : 0,15 bis 1 : 0,65 [mol/mol] liegt und das aliphatische Diol (b2) ein lineares Diol gemäß der allgemeinen Formel (I)

$$HO\text{-}(CH_2)_n\text{-}OH \qquad (I)$$

ist, in der n 2, 3, 4, 5 oder 6 bedeutet.

Es wurde überraschend gefunden, dass das erfindungsgemäße Sinterpulver (SP) eine deutlich verlangsamte Kristallisationskinetik und somit ein so weit verbreitertes Sinterfenster ($W_{SP}$) beziehungsweise einen so weit verbreiterten Verarbeitungstemperaturbereich aufweist, dass der durch Sintern des Sinterpulvers (SP) hergestellte Formkörper keinen oder einen deutlich reduzierten Verzug aufweist. Darüber hinaus ist die Schmelztemperatur des erfindungsgemäßen Sinterpulvers (SP) im Vergleich zu der Schmelztemperatur von Sinterpulvern aus dem Stand der Technik, die einen teilkristallinen Terephthalat-Polyester enthalten, deutlich geringer, so dass das erfindungsgemäße Sinterpulver (SP) problemlos auf allen Standard-Lasersinteranlagen mit maximalen Bauraumtemperaturen von 200°C eingesetzt werden kann. Außerdem ist der Energiebedarf beim Sintern durch die abgesenkte Schmelztemperatur deutlich geringer.

Des Weiteren wurde überraschend gefunden, dass die aus dem erfindungsgemäßen Sinterpulver hergestellten Formkörper sehr gute mechanische Eigenschaften wie ein hohes Zug-E-Modul und eine hohe Zugfestigkeit aufweisen.

Zudem ist der Abbau des im erfindungsgemäßen Verfahren eingesetzten Sinterpulvers (SP) auch nach thermischer Behandlung gering. Dies bedeutet, dass bei der Herstellung des Formkörpers nicht aufgeschmolzenes Sinterpulver (SP) wiederverwendet werden kann. Das Sinterpulver (SP) besitzt auch nach mehreren Lasersinterzyklen ähnlich vorteilhafte Sintereigenschaften wie beim ersten Sinterzyklus.

Sinterpulver (SP)

Erfindungsgemäß enthält das Sinterpulver (SP) als Komponente (A) mindestens einen teilkristallinen Terephthalat-Polyester, gegebenenfalls als Komponente (B) mindestens ein weiteres Polymer, gegebenenfalls als Komponente (C) mindestens ein Additiv und gegebenenfalls als Komponente (D) mindestens ein Verstärkungsmittel.

Im Rahmen der vorliegenden Erfindung werden die Begriffe "Komponente (A)" und "mindestens ein teilkristalliner Terephthalat-Polyester" synonym gebraucht und besitzen daher die gleiche Bedeutung.

Entsprechendes gilt für die Begriffe "Komponente (B)" und "mindestens ein weiteres Polymer". Diese Begriffe werden im Rahmen der vorliegenden Erfindung ebenfalls synonym gebraucht und besitzen daher die gleiche Bedeutung.

Dementsprechend werden auch die Begriffe "Komponente (C)" und "mindestens ein Additiv" sowie die Begriffe "Komponente (D)" und "mindestens ein Verstärkungsmittel" im Rahmen der vorliegenden Erfindung jeweils synonym gebraucht und besitzen die gleiche Bedeutung.

Das Sinterpulver (SP) kann die Komponente (A) sowie gegebenenfalls die Komponenten (B), (C) und (D) in beliebigen Mengen enthalten.

Beispielsweise enthält das Sinterpulver (SP) im Bereich von 15 bis 100 Gew.-% der Komponente (A), im Bereich von 0 bis 25 Gew.-% der Komponente (B), im Bereich von 0 bis 20 Gew.-% der Komponente (C) und im Bereich von 0 bis 40 Gew.-% der Komponente (D), jeweils bezogen auf die Summe der Gewichtsprozente der Komponenten (A) sowie gegebenenfalls (B), (C) und (D), bevorzugt bezogen auf das Gesamtgewicht des Sinterpulvers (SP).

In einer bevorzugten Ausführungsform enthält das Sinterpulver (SP) im Bereich von 15 bis 95 Gew.-% der Komponente (A), im Bereich von 0 bis 25 Gew.-% der Komponente (B), im Bereich von 0 bis 20 Gew.-% der Komponente (C) und im Bereich von 5 bis 40 Gew.-% der Komponente (D), jeweils bezogen auf die Summe der Gewichtsprozente der Komponenten (A) und (D) sowie gegebenenfalls (B) und (C), bevorzugt bezogen auf das Gesamtgewicht des Sinterpulvers (SP).

In einer alternativen bevorzugten Ausführungsform enthält das Sinterpulver (SP)

im Bereich von 15 bis 98,9 Gew.-%, bevorzugt im Bereich von 17 bis 92 Gew.-%, der Komponente (A),

im Bereich von 1 bis 25 Gew.-%, bevorzugt im Bereich von 2 bis 23 Gew.-%, der Komponente (B),

im Bereich von 0,1 bis 20 Gew.-%, bevorzugt im Bereich von 1 bis 20 Gew.-%, der Komponente (C) und

im Bereich von 0 bis 40 Gew.-%, bevorzugt im Bereich von 5 bis 40 Gew.-%, der Komponente (D),

jeweils bezogen auf die Summe der Gewichtsprozente der Komponenten (A), (B) und (C) sowie gegebenenfalls (D), bevorzugt bezogen auf das Gesamtgewicht des Sinterpulvers (SP).

Die Gewichtsprozente der Komponenten (A) sowie gegebenenfalls (B), (C) und (D) addieren sich üblicherweise zu 100 Gew.-%.

Das Sinterpulver (SP) weist Partikel auf. Diese Partikel haben beispielsweise eine Größe (D50-Wert) im Bereich von 10 bis 250 $\mu$m, bevorzugt im Bereich von 15 bis 200 $\mu$m, besonders bevorzugt im Bereich von 25 bis 90 $\mu$m und insbesondere bevorzugt im Bereich von 40 bis 80 $\mu$m.

Gegenstand der vorliegenden Erfindung ist daher auch ein Sinterpulver (SP), dadurch gekennzeichnet, dass das Sinterpulver eine mittlere Partikelgröße (D50-Wert) im Bereich von 10 bis 250 $\mu$m aufweist.

Das erfindungsgemäße Sinterpulver (SP) weist beispielsweise

einen D10-Wert im Bereich von 10 bis 60 $\mu$m,
einen D50-Wert im Bereich von 25 bis 90 $\mu$m und
einen D90-Wert im Bereich von 50 bis 150 $\mu$m auf.

Bevorzugt weist das erfindungsgemäße Sinterpulver (SP)

einen D10-Wert im Bereich von 20 bis 50 $\mu$m,
einen D50-Wert im Bereich von 40 bis 80 $\mu$m und
einen D90-Wert im Bereich von 80 bis 125 $\mu$m auf.

Gegenstand der vorliegenden Erfindung ist daher auch ein Sinterpulver (SP), dadurch gekennzeichnet, dass das Sinterpulver (SP)

einen D10-Wert im Bereich von 10 bis 60 μm,
einen D50-Wert im Bereich von 25 bis 90 μm und
einen D90-Wert im Bereich von 50 bis 150 μm
aufweist.

Unter dem "D10-Wert" wird im Rahmen der vorliegenden Erfindung die Partikelgröße verstanden, bei der 10 Vol.-% der Partikel bezogen auf das Gesamtvolumen der Partikel kleiner oder gleich dem D10-Wert sind und 90 Vol.-% der Partikel bezogen auf das Gesamtvolumen der Partikel größer als der D10-Wert sind. In Analogie dazu wird unter dem "D50-Wert" die Partikelgröße verstanden, bei der 50 Vol.-% der Partikel bezogen auf das Gesamtvolumen der Partikel kleiner oder gleich dem D50-Wert sind und 50 Vol.-% der Partikel bezogen auf das Gesamtvolumen der Partikel größer als der D50-Wert sind. Entsprechend wird unter dem "D90-Wert" die Partikelgröße verstanden, bei der 90 Vol.-% der Partikel bezogen auf das Gesamtvolumen der Partikel kleiner oder gleich dem D90-Wert sind und 10 Vol.-% der Partikel bezogen auf das Gesamtvolumen der Partikel größer als der D90-Wert sind.

Zur Ermittlung der Partikelgrößen wird das Sinterpulver (SP) trocken mittels Druckluft oder in einem Lösungsmittel, wie beispielsweise Wasser oder Ethanol, suspendiert und diese Suspension vermessen. Die Bestimmung des D10-, D50- und D90-Wertes erfolgt mittels Laserbeugung unter Verwendung eines Master Sizers 3000 der Firma Malvern. Die Auswertung erfolgt mittels Fraunhofer-Beugung.

Bevorzugt ist das Sinterpulver (SP) getempert.

Vorzugsweise wird das Sinterpulver (SP) bei einer Temperatur $T_T$ im Bereich von 80 bis 140°C, mehr bevorzugt im Bereich von 85 bis 135°C, und am meisten bevorzugt im Bereich von 100 bis 130°C, getempert.

In einer bevorzugten Ausführungsform wird das Sinterpulver (SP) in einer Zeit im Bereich von 1 bis 20 Stunden getempert. Vorzugsweise erfolgt das Tempern in einem Trockenschrank unter Vakuum oder unter Schutzgas. Als Schutzgas wird beispielsweise Stickstoff eingesetzt.

Das Sinterpulver (SP) weist üblicherweise eine Schmelztemperatur ($T_M$) im Bereich von 130 bis 210 °C auf. Bevorzugt liegt die Schmelztemperatur ($T_M$) des Sinterpulvers (SP) im Bereich von 135 bis 205°C und insbesondere bevorzugt im Bereich von 140 bis 180°C.

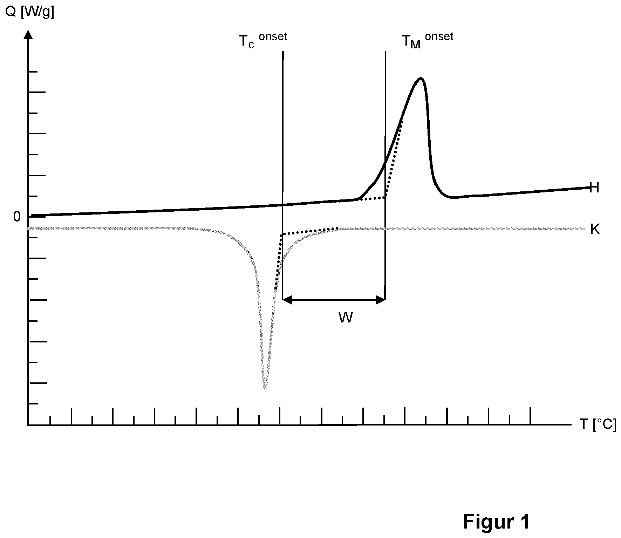

Die Schmelztemperatur ($T_M$) wird im Rahmen der vorliegenden Erfindung bestimmt mittels dynamischer Differenzkalorimetrie (DDK; Differential Scanning Calorimetry, DSC). Es werden üblicherweise ein Heizlauf (H) und ein Kühllauf (K), jeweils mit einer konstanten Heizrate bzw. Kühlrate im Bereich von 5 bis 25 K/min, vorzugsweise bei einer konstanten Heizrate bzw. Kühlrate im Bereich von 5 bis 15 K/min, gemessen. Dabei wird ein DSC-Diagramm, wie es in Figur 1 beispielhaft gezeigt ist, erhalten. Unter der Schmelztemperatur ($T_M$) wird dann die Temperatur verstanden, bei der der Aufschmelzpeak des Heizlaufs (H) des DSC-Diagramms ein Maximum aufweist.

Das Sinterpulver (SP) weist außerdem üblicherweise eine Kristallisationstemperatur ($T_C$) im Bereich von 70 bis 130°C auf. Bevorzugt liegt die Kristallisationstemperatur ($T_C$) des Sinterpulvers (SP) im Bereich von 75 bis 125°C und insbesondere bevorzugt im Bereich von 80 bis 120°C.

Die Kristallisationstemperatur ($T_C$) wird im Rahmen der vorliegenden Erfindung mittels dynamischer Differenzkalorimetrie (DDK; Differential Scanning Calorimetry, DSC) bestimmt. Dabei werden üblicherweise ein Heizlauf (H) und ein Kühllauf (K), jeweils mit einer konstanten Heizrate bzw. Kühlrate im Bereich von 5 bis 25 K/min, vorzugsweise bei einer konstanten Heizrate bzw. Kühlrate im Bereich von 5 bis 15 K/min, gemessen. Dabei wird ein DSC-Diagramm, wie es in der Figur 1 beispielhaft gezeigt ist, erhalten. Die Kristallisationstemperatur ($T_C$) ist dann die Temperatur am Minimum des Kristallisationspeaks der DSC-Kurve.

Das Sinterpulver (SP) weist außerdem üblicherweise ein Sinterfenster ($W_{SP}$) auf.

Werden Heizlauf (H) und Kühllauf (K) mit einer konstanten Heizrate bzw. Kühlrate im Bereich von 5 bis 15 K/min gemessen, ist das Sinterfenster ($W_{SP}$), wie nachfolgend beschrieben, die Differenz zwischen der Onset-Temperatur des Aufschmelzens ($T_M^{onset}$) und der Onset-Temperatur der Kristallisation ($T_C^{onset}$). Die Onset-Temperatur des Aufschmelzens ($T_M^{onset}$) und die Onset-Temperatur der Kristallisation ($T_C^{onset}$) werden wie nachfolgend zu Schritt c) beschrieben bestimmt.

Das Sinterfenster ($W_{SP}$) des Sinterpulvers (SP) liegt dann beispielsweise im Bereich von 10 bis 40 K (Kelvin), mehr bevorzugt im Bereich von 15 bis 35 K, besonders bevorzugt im Bereich von 20 bis 33 K und insbesondere bevorzugt im Bereich von 22 bis 33 K.

Werden Heizlauf (H) und Kühllauf (K) mit einer konstanten Heizrate bzw. Kühlrate im Bereich von 15 bis 25 K/min gemessen, ist das Sinterfenster ($W_{SP}$) im Rahmen der vorliegenden Erfindung die Differenz zwischen der Onset-Temperatur des Aufschmelzens ($T_M^{onset}$) und der Glastemperatur ($T_G$). Die Onset-Temperatur des Aufschmelzens ($T_M^{onset}$) und die Glastemperatur ($T_C$) werden wie nachfolgend zu Schritt c) beschrieben bestimmt.

Das Sinterfenster ($W_{SP}$) des Sinterpulvers (SP) ist in diesem Fall deutlich breiter, es liegt dann beispielsweise im Bereich von 20 bis 80 K (Kelvin), mehr bevorzugt im Bereich von 30 bis 70 K.

Das Sinterpulver (SP) weist zudem üblicherweise eine erste Schmelzenthalpie $\Delta H1_{(SP)}$ und eine zweite Schmelzenthalpie $\Delta H2_{(SP)}$ auf, wobei die Schmelzenthalpien $\Delta H1_{(SP)}$ und $\Delta H2_{(SP)}$ des Sinterpulvers (SP) proportional zu der Fläche unter dem Aufschmelzpeak des ersten Heizlaufs (H1) beziehungsweise des zweiten Heizlaufs (H2) des DSC-Diagramms sind. Dabei gilt: Je höher die Differenz zwischen der ersten Schmelzenthalpie $\Delta H1_{(SP)}$ und der zweiten Schmelzenthalpie $\Delta H2_{(SP)}$, desto langsamer die Kristallisation und desto breiter das Sinterfenster ($W_{SP}$). Im Rahmen der vorliegenden Erfindung beträgt die Differenz zwischen der ersten Schmelzenthalpie $\Delta H1_{(SP)}$ und der zweiten Schmelzenthalpie $\Delta H2_{(SP)}$ vorzugsweise mindesten 10 J/g, mehr bevorzugt mindestens 12 J/g.

Das Sinterpulver (SP) kann nach allen dem Fachmann bekannten Methoden hergestellt werden. Beispielsweise wird das Sinterpulver durch Vermahlen, durch Fällung, durch Schmelzemulgierung, durch Sprühextrusion oder durch Mikrogranulierung hergestellt. Die Herstellung des Sinterpulvers (SP) durch Vermahlen, durch Fällung, durch Schmelzemulgierung, durch Sprühextrusion oder durch Mikrogranulierung wird im Rahmen der vorliegenden Erfindung auch als Mikronisierung bezeichnet.

Wird das Sinterpulver (SP) durch Fällung hergestellt, so werden üblicherweise die Komponenten (A) sowie gegebenenfalls (B), (C) und (D) mit einem Lösungsmittel gemischt und die Komponente (A) sowie gegebenenfalls die Komponente (B) gegebenenfalls unter Erwärmen in dem Lösungsmittel unter Erhalt einer Lösung gelöst. Die Fällung des Sinterpulvers (SP) erfolgt anschließend beispielsweise dadurch, dass die Lösung abgekühlt wird, das Lösungsmittel aus der Lösung abdestilliert wird oder ein Fällungsmittel zu der Lösung gegeben wird.

Das Vermahlen kann nach allen dem Fachmann bekannten Methoden durchgeführt werden, beispielsweise werden die Komponenten (A) sowie gegebenenfalls (B), (C) und (D) in eine Mühle gegeben und darin vermahlen.

Als Mühle eignen sich alle dem Fachmann bekannten Mühlen, beispielsweise Sichtermühlen, Gegenstrahlmühlen, Hammermühlen, Kugelmühlen, Schwingmühlen oder Rotormühlen wie Stiftmühlen und Wirbelstrommühlen.

Das Mahlen in der Mühle kann ebenfalls nach allen dem Fachmann bekannten Methoden erfolgen. Beispielsweise kann die Mahlung unter Inertgas stattfinden und/oder unter Kühlung mit flüssigem Stickstoff. Die Kühlung mit flüssigem Stickstoff ist bevorzugt. Die Temperatur bei der Mahlung ist beliebig, bevorzugt wird die Mahlung bei Temperaturen von flüssigem Stickstoff durchgeführt, beispielsweise bei einer Temperatur im Bereich von -210 bis -195 °C. Die Temperatur der Komponenten beim Vermahlen liegt dann beispielsweise im Bereich von -40 bis -30°C.

Bevorzugt werden zunächst die Komponenten miteinander gemischt und anschließend gemahlen.

Vorzugsweise liegt mindestens die Komponente (A) vor der Mikronisierung in Form eines Granulats vor. Neben der Komponente (A) können auch gegebenenfalls die Komponenten (B), (C) und (D) in Form eines Granulats vorliegen. Das Granulat kann beispielsweise kugelförmig, zylinderförmig oder ellipsenförmig sein. Im Rahmen der vorliegenden Erfindung wird in einer bevorzugten Ausführungsform ein Granulat verwendet, das die Komponenten (A) sowie gegebenenfalls (B), (C) und (D) vorgemischt enthält.

Das Verfahren zur Herstellung des Sinterpulvers (SP) umfasst dann vorzugsweise die Schritte

a) Mischen der Komponenten (A) sowie gegebenenfalls (B), (C) und/oder (D):

(A) mindestens eines teilkristallinen Terephthalat-Polyesters, der hergestellt wird durch Umsetzung mindestens der Komponenten (a) und (b):

(a) mindestens einer aromatischen Dicarbonsäure und

(b) mindestens zweier aliphatischer Diole (b1) und (b2), wobei das aliphatische Diol (b1) Neopentylglycol ist,

(B) gegebenenfalls mindestens eines weiteren Polymers,

(C) gegebenenfalls mindestens eines Additivs und/oder

(D) gegebenenfalls mindestens eines Verstärkungsmittels,

in einem Extruder unter Erhalt eines Extrudats (E), das die Komponenten (A) sowie gegebenenfalls (B), (C) und/oder (D) enthält,

b) Pelletierung des in Schritt a) erhaltenen Extrudats (E) unter Erhalt eines Granulats (G), das die Komponenten (A) sowie gegebenenfalls (B), (C) und/oder (D) enthält,

c) Mikronisierung des in Schritt c) erhaltenen Granulats (G) unter Erhalt des Sinterpulvers (SP), vorzugsweise durch Vermahlen.

Gegenstand der vorliegenden Erfindung ist daher auch ein Verfahren zur Herstellung eines Sinterpulvers (SP) gemäß einem der Ansprüche 1 bis 9 umfassend die Schritte

a) Mischen der Komponenten (A) sowie gegebenenfalls (B), (C) und/oder (D):

(A) mindestens eines teilkristallinen Terephthalat-Polyesters, der hergestellt wird durch Umsetzung mindestens der Komponenten (a) und (b):

  (a) mindestens einer aromatischen Dicarbonsäure und
  (b) mindestens zweier aliphatischer Diole (b1) und (b2), wobei das aliphatische Diol (b1) Neopentylglycol ist,

(B) gegebenenfalls mindestens eines weiteren Polymers,
(C) gegebenenfalls mindestens eines Additivs und/oder
(D) gegebenenfalls mindestens eines Verstärkungsmittels,

in einem Extruder unter Erhalt eines Extrudats (E), das die Komponenten (A) sowie gegebenenfalls (B), (C) und/oder (D) enthält,

b) Pelletierung des in Schritt a) erhaltenen Extrudats (E) unter Erhalt eines Granulats (G), das die Komponenten (A) sowie gegebenenfalls (B), (C) und/oder (D) enthält,

c) Mikronisierung des in Schritt c) erhaltenen Granulats (G) unter Erhalt des Sinterpulvers (SP).

Es versteht sich von selbst, dass im Fall, dass die Komponente (A) bereits als Granulat vorliegt und das erfindungsgemäße Sinterpulver (SP) nur die Komponente (A), nicht aber die Komponenten (B), (C) und (D) enthält, die Schritte a) und b) im Rahmen der vorliegenden Erfindung entfallen können.

In einer bevorzugten Ausführungsform wird das in Schritt c) erhaltene Sinterpulver (SP) anschließend in einem Schritt d) bei einer Temperatur $T_T$ getempert unter Erhalt eines getemperten Sinterpulvers (SP).

Das Verfahren zur Herstellung eines getemperten Sinterpulvers (SP) umfasst dann vorzugsweise folglich die folgenden Schritte:

a) Mischen der Komponenten (A) sowie gegebenenfalls (B), (C) und/oder (D):

(A) mindestens eines teilkristallinen Terephthalat-Polyesters, der hergestellt wird durch Umsetzung mindestens der Komponenten (a) und (b):

  (a) mindestens einer aromatischen Dicarbonsäure und

  (b) mindestens zweier aliphatischer Diole (b1) und (b2), wobei das aliphatische Diol (b1) Neopentylglycol ist,

(B) gegebenenfalls mindestens eines weiteren Polymers,

(C) gegebenenfalls mindestens eines Additivs und/oder

(D) gegebenenfalls mindestens eines Verstärkungsmittels,

in einem Extruder unter Erhalt eines Extrudats (E), das die Komponenten (A) sowie gegebenenfalls (B), (C) und/oder (D) enthält,

b) Pelletierung des in Schritt a) erhaltenen Extrudats (E) unter Erhalt eines Granulats (G), das die Komponenten (A) sowie gegebenenfalls (B), (C) und/oder (D) enthält,

c) Mikronisierung des in Schritt c) erhaltenen Granulats (G) unter Erhalt des Sinterpulvers (SP),

d) Tempern des in Schritt c) erhaltenen Sinterpulvers (SP) bei einer Temperatur $T_T$ unter Erhalt eines getemperten Sinterpulvers (SP).

In einer weiteren bevorzugten Ausführungsform umfasst das Verfahren zur Herstellung des Sinterpulvers (SP) die folgenden Schritte:

a) Mischen der Komponenten (A) sowie gegebenenfalls (B), (C) und/oder (D):

(A) mindestens eines teilkristallinen Terephthalat-Polyesters, der hergestellt wird durch Umsetzung mindestens der Komponenten (a) und (b):

(a) mindestens einer aromatischen Dicarbonsäure und

(b) mindestens zweier aliphatischer Diole (b1) und (b2), wobei das aliphatische Diol (b1) Neopentylglycol ist,

(B) gegebenenfalls mindestens eines weiteren Polymers,

(C) gegebenenfalls mindestens eines Additivs und/oder

(D) gegebenenfalls mindestens eines Verstärkungsmittels,

in einem Extruder unter Erhalt eines Extrudats (E), das die Komponenten (A) sowie gegebenenfalls (B), (C) und/oder (D) enthält,

b) Pelletierung des in Schritt a) erhaltenen Extrudats (E) unter Erhalt eines Granulats (G), das die Komponenten (A) sowie gegebenenfalls (B), (C) und/oder (D) enthält,

ci) Mikronisierung des in Schritt c) erhaltenen Granulats (G) unter Erhalt eines Terephthalat-Polyesterpulvers (TP),

cii) Mischen des in Schritt ci) erhaltenen Terephthalat-Polyesterpulvers (TP) mit einer Rieselhilfe unter Erhalt des Sinterpulvers (SP).

Vorzugsweise wird das in Schritt ci) erhaltene Terephthalat-Polyesterpulver (TP) oder das in Schritt cii) erhaltene Sinterpulver (SP) anschließend in einem Schritt d1) bei einer Temperatur $T_T$ getempert unter Erhalt eines getemperten Sinterpulvers (SP).

Enthält das Sinterpulver (SP) die Komponente (D), wird vorzugsweise ein Granulat verwendet, das nur die Komponenten (A) und gegebenenfalls die Komponenten (B) und/oder (C) vorgemischt enthält. Das mindestens eine Verstärkungsmittel (C) wird dann vorzugsweise erst nach dem Mikronisierungsschritt zugemischt.

Das Verfahren zur Herstellung des Sinterpulvers (SP) umfasst dann vorzugsweise die folgenden Schritte:

a) Mischen der Komponenten (A) und gegebenenfalls (B) und/oder (C):

(A) mindestens eines teilkristallinen Terephthalat-Polyesters, der hergestellt wird durch Umsetzung mindestens der Komponenten (a) und (b):

(a) mindestens einer aromatischen Dicarbonsäure und

(b) mindestens zweier aliphatischer Diole (b1) und (b2), wobei das aliphatische Diol (b1) Neopentylglycol ist,

(B) gegebenenfalls mindestens eines weiteren Polymers, und/oder

(C) gegebenenfalls mindestens eines Additivs

in einem Extruder unter Erhalt eines Extrudats (E), das die Komponenten (A) und gegebenenfalls (B) und/oder (C) enthält,

b) Pelletierung des in Schritt a) erhaltenen Extrudats (E) unter Erhalt eines Granulats (G1), das die Komponenten (A) und gegebenenfalls (B) und/oder (C) enthält,

c) Mikronisierung des in Schritt c) erhaltenen Granulats (G1) unter Erhalt eines Sinterpulvers (SP1), vorzugsweise durch Vermahlen,

e) Mischen des Sinterpulvers (SP1) und der Komponente (D):

(D) mindestens eines Verstärkungsmittels,

unter Erhalt des Sinterpulvers (SP).

Vorzugsweise wird das in Schritt c) erhaltene Sinterpulver (SP1) oder das in Schritt e) erhaltene Sinterpulver (SP) anschließend in einem Schritt d2) bei einer Temperatur $T_T$ getempert unter Erhalt eines getemperten Sinterpulvers (SP), vorzugsweise wird das in Schritt c) erhaltene Sinterpulver (SP1) getempert.

Wird während des Verfahrens zur Herstellung des Sinterpulvers (SP) eine Rieselhilfe zugemischt, umfasst das Verfahren dann vorzugsweise die folgenden Schritte:

a) Mischen der Komponenten (A) und gegebenenfalls (B) und/oder (C):

(A) mindestens eines teilkristallinen Terephthalat-Polyesters, der hergestellt wird durch Umsetzung mindestens der Komponenten (a) und (b):

(a) mindestens einer aromatischen Dicarbonsäure und
(b) mindestens zweier aliphatischer Diole (b1) und (b2), wobei das aliphatische Diol (b1) Neopentylglycol ist,

(B) gegebenenfalls mindestens eines weiteren Polymers, und/oder

(C) gegebenenfalls mindestens eines Additivs

in einem Extruder unter Erhalt eines Extrudats (E), das die Komponenten (A) und gegebenenfalls (B) und/oder (C) enthält,

b) Pelletierung des in Schritt a) erhaltenen Extrudats (E) unter Erhalt eines Granulats (G1), das die Komponenten (A) und gegebenenfalls (B) und/oder (C) enthält,

ci) Mikronisierung des in Schritt c) erhaltenen Granulats (G1) unter Erhalt eines Terephthalat-Polyesterpulvers (TP1), vorzugsweise durch Vermahlen,

cii) Mischen des in Schritt ci) erhaltenen Terephthalat-Polyesterpulvers (TP1) mit einer Rieselhilfe unter Erhalt eines Sinterpulvers (SP2)

e) Mischen des Sinterpulvers (SP2) und der Komponente (D):

(D) mindestens eines Verstärkungsmittels,

unter Erhalt des Sinterpulvers (SP).

Vorzugsweise wird das in Schritt ci) erhaltene Terephthalat-Polyesterpulvers (TP1), das in Schritt cii) erhaltene Sinterpulver (SP2) oder das in Schritt e) erhaltene Sinterpulver (SP) anschließend in einem Schritt d3) bei einer Temperatur $T_T$ getempert unter Erhalt eines getemperten Sinterpulvers (SP).

Geeignete Rieselhilfen sind beispielsweise Kieselsäuren, amorphes Siliciumoxid oder Aluminiumoxide. Ein geeignetes Aluminiumoxid ist beispielsweise Aeroxide® Alu C der Firma Evonik.

Gegenstand der vorliegenden Erfindung ist damit auch ein Verfahren zur Herstellung eines Sinterpulvers (SP), bei dem die Rieselhilfe in Schritt cii) ausgewählt ist aus Kieselsäuren, amorphem Siliciumoxid und/oder Aluminiumoxiden.

Für den Fall, dass das Sinterpulver (SP) eine Rieselhilfe enthält, wird diese bevorzugt in Verfahrensschritt cii) zugegeben. Das Sinterpulver (SP) enthält in einer Ausführungsform 0,02 bis 1 Gew.-%, bevorzugt 0,05 bis 0,8 Gew.-% und besonders bevorzugt 0,1 bis 0,6 Gew.-% Rieselhilfe, jeweils bezogen auf das Gesamtgewicht des Terephthalat-Polyesterpulvers (TP) oder (TP1) und der Rieselhilfe.

Für das Vermahlen in Schritt c) und in Schritt ci) gelten die zuvor beschriebenen Ausführungen und Bevorzugungen im Hinblick auf das Vermahlen entsprechend.

Die Schritte d), d1), d2) und d3) werden vorzugsweise bei einer Temperatur $T_T$ im Bereich von 80 bis 140°C, mehr bevorzugt im Bereich von 85 bis 135°C und am meisten bevorzugt im Bereich von 100 bis 130°C, durchgeführt.

Die Schritte d), d1), d2) und d3) werden darüber hinaus vorzugsweise in einer Zeit im Bereich von 1 bis 20 Stunden durchgeführt. Vorzugsweise erfolgt das Tempern in einem Trockenschrank unter Vakuum oder unter Schutzgas. Als Schutzgas wird beispielsweise Stickstoff eingesetzt. Das Tempern kann in einem statischen oder in einem bewegten Behälter wie einem Taumelmischer durchgeführt werden.

Ein weiterer Gegenstand der vorliegenden Erfindung ist daher auch das Sinterpulver (SP), erhältlich nach dem erfindungsgemäßen Verfahren.

EP 4 073 140 B1

Komponente (A)

Erfindungsgemäß ist die Komponente (A) mindestens ein teilkristalliner Terephthalat-Polyester.

"Mindestens ein teilkristalliner Terephthalat-Polyester (A)" bedeutet im Rahmen der vorliegenden Erfindung sowohl genau ein teilkristalliner Terephthalat-Polyester (A) als auch eine Mischung aus zwei oder mehreren teilkristallinen Terephthalat-Polyestern (A).

"Teilkristallin" bedeutet im Rahmen der vorliegenden Erfindung, dass der teilkristalline Terephthalat-Polyester (A) eine Schmelzenthalpie $\Delta H2_{(A)}$ von größer als 1 J/g, bevorzugt von größer als 2 J/g aufweist, jeweils gemessen mittels dynamischer Differenzkalorimetrie (differential scanning calorimetry; DSC) gemäß ISO 11357-4:2014.

Der erfindungsgemäße mindestens eine teilkristalline Terephthalat-Polyester (A) weist also üblicherweise eine Schmelzenthalpie $\Delta H2_{(A)}$ von größer als 1 J/g, bevorzugt von größer als 2 J/g auf, jeweils gemessen mittels dynamischer Differenzkalorimetrie (differential scanning calorimetry; DSC) gemäß ISO 11357-4:2014.

Der erfindungsgemäße mindestens eine teilkristalline Terephthalat-Polyester (A) weist üblicherweise eine Schmelzenthalpie $\Delta H2_{(A)}$ von weniger als 150 J/g, bevorzugt von weniger als 100 J/g und insbesondere bevorzugt von weniger als 80 J/g auf, jeweils gemessen mittels dynamischer Differenzkalorimetrie (differential scanning calorimetry; DSC) gemäß ISO 11357-4:2014.

Geeignete teilkristalline Terephthalat-Polyester (A) weisen im Allgemeinen eine Viskositätszahl (VZ(A)) im Bereich von 50 bis 220 ml/g, vorzugsweise im Bereich von 80 bis 210 ml/g und insbesondere bevorzugt im Bereich von 90 bis 200 ml/g auf, bestimmt in einer 5 mg/ml Lösung in einem Phenol/o-Dichlorbenzolgemisch (Gew.-Verhältnis 1:1 bei 25 °C) gemäß ISO 1628.

Die erfindungsgemäße Komponente (A) weist üblicherweise eine Schmelztemperatur ($T_{M(A)}$) auf. Bevorzugt liegt die Schmelztemperatur ($T_{M(A)}$) der Komponente (A) im Bereich von 130 bis 210 °C, besonders bevorzugt im Bereich von 135 bis 205 °C und insbesondere bevorzugt im Bereich von 140 bis 180 °C.

Geeignete Komponenten (A) weisen ein gewichtsmittleres Molekulargewicht ($Mw_{(A)}$) im Bereich von 500 bis 2 000 000 g/mol auf, bevorzugt im Bereich von 10 000 bis 90 000 g/mol und insbesondere bevorzugt im Bereich von 20 000 bis 70 000 g/mol. Das gewichtsmittlere Molekulargewicht ($Mw_{(A)}$) wird bestimmt mittels SEC-MALLS (Size Exclusion Chromatography-Multi-Angle Laser Light Scattering) nach Chi-san Wu "Handbook of size exclusion chromatography and related techniques", Seite 19.

Der teilkristalline Terephthalat-Polyester (A) kann nach allen dem Fachmann bekannten Methoden hergestellt werden.

Im Rahmen der vorliegenden Erfindung wird der mindestens eine teilkristalline Terephthalat-Polyester (A) durch Umsetzung mindestens der Komponenten (a) und (b) hergestellt:

(a) mindestens einer aromatischen Dicarbonsäure und

(b) mindestens zweier aliphatischer Diole (b1) und (b2), wobei das aliphatische Diol (b1) Neopentylglycol ist und das aliphatische Diol (b2) ein lineares Diol gemäß der allgemeinen Formel (I)

$$HO-(CH_2)_n-OH \qquad (I)$$

ist, in der n 2, 3, 4, 5 oder 6 bedeutet.

Die Umsetzung mindestens der Komponenten (a) und (b) erfolgt üblicherweise in einer Kondensationsreaktion. Der Begriff "Kondensationsreaktion" ist dem Fachmann prinzipiell bekannt. Im Rahmen der vorliegenden Erfindung wird unter dem Begriff "Kondensationsreaktion" die Reaktion mindestens der Komponenten (a) und (b) unter Abspaltung von Wasser und/oder Alkohol unter Erhalt des teilkristallinen Terephthalat-Polyesters (A) verstanden.

Das molare Verhältnis der Komponente (a) zu der Komponente (b) bei der Herstellung des mindestens einen teilkristallinen Terephthalat-Polyesters (A) liegt vorzugsweise im Bereich von 1 : 0,8 bis 1 : 1,1 [mol/mol], bevorzugt im Bereich von 1 : 0,85 bis 1 : 1,05 [mol/mol].

*Komponente (a)*

Bei der Komponente (a) handelt es sich um mindestens eine aromatische Dicarbonsäure.

Die Begriffe "mindestens eine aromatische Dicarbonsäure" sowie "Komponente (a)" werden im Rahmen der vorliegenden Erfindung synonym gebraucht und haben den gleichen Bedeutungsinhalt. Darüber hinaus wird im Rahmen der vorliegenden Erfindung unter dem Begriff "mindestens eine aromatische Dicarbonsäure" genau eine aromatische Dicarbonsäure sowie Mischungen aus zwei oder mehr aromatischen Dicarbonsäuren verstanden. In einer bevorzugten Ausführungsform wird im erfindungsgemäßen Verfahren genau eine aromatische Dicarbonsäure eingesetzt.

Aromatische Dicarbonsäuren sind dem Fachmann prinzipiell bekannt.

Unter aromatischen Dicarbonsäuren werden im Rahmen der vorliegenden Erfindung die aromatischen Dicarbonsäuren selbst sowie die Derivate der aromatischen Dicarbonsäuren, wie aromatische Dicarbonsäureester, verstanden. Als Ester der aromatischen Dicarbonsäuren kommen dabei die Di-$C_1$-$C_6$-Alkylester der aromatischen Dicarbonsäuren, zum Beispiel die Dimethyl-, Diethyl-, Di-n-propyl-, Di-iso-propyl-, Di-n-butyl-, Di-iso-butyl-, Di-t-butyl-, Di-n-pentyl-, Di-iso-pentyl- oder Di-n-hexylester der aromatischen Dicarbonsäuren, in Betracht.

Beispiele für aromatische Dicarbonsäuren sind Terephthalsäure, Isophthalsäure, Phthalsäure oder die Naphthalindicarbonsäuren.

Im Rahmen der vorliegenden Erfindung ist die mindestens eine aromatische Dicarbonsäure vorzugsweise eine aromatische Dicarbonsäure mit 6 bis 12, bevorzugt eine solche mit 6 bis 8 Kohlenstoffatomen, besonders bevorzugt eine mit 8 Kohlenstoffatomen. Die mindestens eine aromatische Dicarbonsäure kann dabei linear oder verzweigt sein.

In einer bevorzugten Ausführungsform der vorliegenden Erfindung ist die mindestens eine aromatische Dicarbonsäure ausgewählt aus der Gruppe bestehend aus Terephthalsäure, Isophthalsäure und Phthalsäure.

Es versteht sich von selbst, dass auch die Ester der oben genannten aromatischen Dicarbonsäuren als Komponente (a) eingesetzt werden können. Dabei können die Ester der oben genannten aromatischen Dicarbonsäuren einzeln sowie als Mischung aus zwei und mehr Estern der aromatischen Dicarbonsäuren eingesetzt werden.

Darüber hinaus kann auch eine Mischung aus mindestens einer aromatischen Dicarbonsäure und mindestens einem Ester einer aromatischen Dicarbonsäure eingesetzt werden.

*Komponente (b)*

Bei der Komponente (b) handelt es sich um mindestens zwei aliphatische Diole (b1) und (b2), wobei das aliphatische Diol (b1) Neopentylglycol ist.

Die Begriffe "mindestens zwei aliphatische Diole (b1) und (b2), wobei das aliphatische Diol (b1) Neopentylglycol ist" sowie "Komponente (b)" werden im Rahmen der vorliegenden Erfindung synonym gebraucht und haben den gleichen Bedeutungsinhalt. Darüber hinaus werden im Rahmen der vorliegenden Erfindung unter dem Begriff "mindestens zwei aliphatische Diole (b1) und (b2)" genau zwei aliphatische Diole (b1) und (b2) sowie Mischungen aus drei aliphatischen Diole (b1), (b2) und (b3) oder mehr aliphatischen Diolen (b1), (b2), (b3) und (bx) verstanden. Unter dem Begriff "mindestens zwei aliphatische Diole (b1) und (b2), wobei das aliphatische Diol (b1) Neopentylglycol ist" werden außerdem im Rahmen der vorliegenden Erfindung Neopentylglycol und genau ein weiteres aliphatisches Diol (b2) sowie Mischungen aus Neopentylglycol, dem aliphatischen Diol (b2) und einem weiteren aliphatischen Diol (b3) oder Neopentylglycol, den aliphatischen Diolen (b2) und (b3) und mehr aliphatischen Diolen (bx) verstanden.

Im Rahmen der vorliegenden Erfindung ist das aliphatische Diol (b2) verschieden von dem aliphatischen Diol (b1). Ebenso sind die aliphatischen Diole (b3) und (bx) vorzugsweise verschieden von dem aliphatischen Diol (b1).

Aliphatische Diole sind dem Fachmann prinzipiell bekannt.

Beispiele für aliphatische Diole sind Ethylenglycol, 1,3-Propandiol, 1,4-Butandiol, 1,5-Pentandiol, 1,6-Hexandiol, Neopentylglycol, 2-Ethyl-2-Butyl-1,3-Propandiol, 2-Ethyl-2-Isobutyl-1,3-Propandiol, 1,4-Cyclohexan-dimethanol, 2,2,4-Trimethyl-1,6-Hexandiol, Polyethylenglycol, Diole der Dimerfettsäuren oder 2,2,4,4-Tetramethylcyclobutan-1,3-diol.

Im Rahmen der vorliegenden Erfindung ist das aliphatische Diol (b1) Neopentylglycol und das aliphatische Diol (b2) ein lineares Diol gemäß der allgemeinen Formel (I)

$$\text{HO-(CH}_2\text{)}_n\text{-OH} \qquad \text{(I)},$$

in der n 2, 3, 4, 5 oder 6, mehr bevorzugt 4, bedeutet.

Im Fall, dass der mindestens eine teilkristalline Terephthalat-Polyester (A) durch die Umsetzung weiterer aliphatischer Diole (b3) bis (bx) mit der Komponente (a) hergestellt wird, sind diese vorzugsweise ausgewählt aus linearen Diolen gemäß der allgemeinen Formel (I), in der n 2, 3, 4, 5 oder 6 ist, und/oder aus Diolen mit einem Cycloalkyl-Rest.

Das molare Verhältnis der Komponente (a) zu der Komponente (b1) bei der Herstellung des mindestens einen teilkristallinen Terephthalat-Polyesters (A) liegt im Bereich von 1 : 0,15 bis 1 : 0,65 [mol/mol], mehr bevorzugt im Bereich von 1 : 0,2 bis 1 : 0,5 [mol/mol].

In einer bevorzugten Ausführungsform wird der mindestens eine teilkristalline Terephthalat-Polyester (A) hergestellt durch Umsetzung mindestens der Komponenten (a) und (b):

(a) Terephthalsäure und

(b) mindestens zweier aliphatischer Diole (b1) und (b2), wobei das aliphatische Diol (b1) Neopentylglycol ist und das aliphatische Diol (b2) ein lineares Diol gemäß der allgemeinen Formel (I)

$$HO\text{-}(CH_2)_n\text{-}OH \qquad (I),$$

ist, in der n 2, 3, 4, 5 oder 6 bedeutet.

In einer besonders bevorzugten Ausführungsform wird der mindestens eine teilkristalline Terephthalat-Polyester (A) hergestellt durch Umsetzung mindestens der Komponenten (a) und (b):

(a) Terephthalsäure und

(b) mindestens zweier aliphatischer Diole (b1) und (b2), wobei das aliphatische Diol (b1) Neopentylglycol und das aliphatische Diol (b2) 1,4-Butandiol ist.

In dieser Ausführungsform wird der mindestens eine teilkristalline Terephthalat-Polyester (A) vorzugsweise hergestellt durch Umsetzung mindestens der Komponenten (a) und (b):

(a) Terephthalsäure und

(b) mindestens zweier aliphatischer Diole (b1) und (b2), wobei das aliphatische Diol (b1) Neopentylglycol und das aliphatische Diol (b2) 1,4-Butandiol ist,

wobei das molare Verhältnis der Komponente (a) zu der Komponente (b) im Bereich von 1 : 0,8 bis 1 : 1,1 [mol/mol] und das molare Verhältnis der Komponente (a) zu der Komponente (b1) im Bereich von 1 : 0,1 bis 1 : 0,75 [mol/mol] liegt.

Bei der Kondensation der Komponenten (a) und (b) kann zusätzlich als optionale Komponente (c) mindestens ein Kettenverlängerer eingesetzt werden.

Die Begriffe "mindestens ein Kettenverlängerer" sowie "Komponente (c)" werden im Rahmen der vorliegenden Erfindung synonym gebraucht und haben den gleichen Bedeutungsinhalt. Darüber hinaus wird im Rahmen der vorliegenden Erfindung unter dem Begriff "mindestens ein Kettenverlängerer" genau ein Kettenverlängerer sowie Mischungen aus zwei und mehr Kettenverlängerern verstanden. In einer bevorzugten Ausführungsform wird genau ein Kettenverlängerer eingesetzt.

Der mindestens eine Kettenverlängerer ist vorzugsweise ausgewählt aus der Gruppe bestehend aus Verbindungen, die mindestens drei zur Esterbildung befähigte Gruppen enthalten (c1) und aus Verbindungen, die mindestens zwei Isocyanatgruppen enthalten (c2). Epoxide sind ebenfalls geeignete Kettenverlängerer.

Im Fall, dass mindestens ein Kettenverlängerer als Komponente (c) eingesetzt wird, wird der mindestens eine teilkristalline Terephthalat-Polyester hergestellt durch Umsetzung mindestens der Komponenten (a), (b) und (c):

(a) mindestens einer aromatischen Dicarbonsäure,

(b) mindestens zweier aliphatischer Diole (b1) und (b2), wobei das aliphatische Diol (b1) Neopentylglycol ist und das aliphatische Diol (b2) ein lineares Diol gemäß der allgemeinen Formel (I)

$$HO\text{-}(CH_2)_n\text{-}OH \qquad (I)$$

ist, in der n 2, 3, 4, 5 oder 6 bedeutet, und

(c) mindestens eines Kettenverlängerers.

Das Sinterpulver (SP) enthält bevorzugt mindestens 15 Gew.-% der Komponente (A), mehr bevorzugt mindestens 17 Gew.-% der Komponente (A), bezogen auf die Summe der Gewichtsprozente der Komponenten (A) und gegebenenfalls (B), (C) und/oder (D), bevorzugt bezogen auf das Gesamtgewicht des Sinterpulvers (SP).

Das Sinterpulver (SP) enthält weiterhin bevorzugt bis zu 100 Gew.-% der Komponente (A), mehr bevorzugt höchstens 98,9 Gew.-%, besonders bevorzugt höchstens 95 Gew.-%, ganz besonders bevorzugt höchstens 92 Gew.-% der Komponente (A), bezogen auf die Summe der Gewichtsprozente der Komponenten (A) und gegebenenfalls (B), (C) und/oder (D), bevorzugt bezogen auf das Gesamtgewicht des Sinterpulvers (SP).

Komponente (B)

Die Komponente (B) ist mindestens ein weiteres Polymer.

"Mindestens ein weiteres Polymer" bedeutet im Rahmen der vorliegenden Erfindung sowohl genau ein weiteres Polymer als auch eine Mischung aus zwei oder mehreren weiteren Polymeren.

Das mindestens eine weitere Polymer (B) kann ein teilkristallines oder ein amorphes Polymer sein.

Ist das mindestens eine weitere Polymer (B) teilkristallin, ist es im Rahmen der vorliegenden Erfindung bevorzugt, dass das mindestens eine weitere teilkristalline Polymer (B) verschieden von dem mindestens einen teilkristallinen Terephthalat-Polyester gemäß Komponente (A) ist.

Vorzugsweise ist das mindestens eine weitere Polymer (B) ausgewählt aus der Gruppe bestehend aus Polyolefinen, Polyestern, Polyamiden, Polycarbonaten und Polyacrylaten, mehr bevorzugt aus Polyestern, Polycarbonaten und Polyacrylaten.

Ist das mindestens eine weitere teilkristalline Polymer (B) ausgewählt aus Polyestern ist es vorzugsweise ein Polycaprolacton.

Enthält das Sinterpulver die Komponente (B), so enthält es mindestens 1 Gew.-% der Komponente (B), bevorzugt mindestens 2 Gew.-% der Komponente (B), bezogen auf die Summe der Gewichtsprozente der Komponenten (A), (B) und gegebenenfalls (C) und/oder (D), bevorzugt bezogen auf das Gesamtgewicht des Sinterpulvers (SP). Enthält das Sinterpulver die Komponente (B), so enthält es weiterhin höchstens 25 Gew.-% der Komponente (B), bevorzugt höchstens 23 Gew.-% der Komponente (B), bezogen auf die Summe der Gewichtsprozente der Komponenten (A), (B) und gegebenenfalls (C) und/oder (D), bevorzugt bezogen auf das Gesamtgewicht des Sinterpulvers (SP).

Komponente (C)

Die Komponente (C) ist mindestens ein Additiv.

"Mindestens ein Additiv" bedeutet im Rahmen der vorliegenden Erfindung sowohl genau ein Additiv als auch eine Mischung aus zwei oder mehreren Additiven.

Additive als solche sind dem Fachmann bekannt. Beispielsweise ist das mindestens eine Additiv ausgewählt aus der Gruppe bestehend aus Antinukleierungsmitteln, Schlagzähmodifizierern, Flammschutzmitteln, Stabilisatoren, leitfähigen Additiven, Endgruppenfunktionalisierern, Farbstoffen, Antioxidationsmitteln (bevorzugt aus sterisch gehinderten Phenolen) und Farbpigmenten.

Ein geeignetes Antinukleierungsmittel ist beispielsweise Lithiumchlorid. Geeignete Schlagzähmodifizierer sind beispielsweise Ethylen-Propylen-Dien-Kautschuke oder solche auf Basis von Terpolymeren aus Ethylen, Methylacrylat und GlycidylMethacrylat (GMA). Geeignete Flammschutzmittel sind beispielsweise Phosphinsäuresalze. Geeignete Stabilisatoren sind beispielsweise Phenole, Phosphite wie beispielsweise Natriumhypophosphit und Kupferstabilisatoren. Geeignete leitfähige Additive sind Kohlenstofffasern, Metalle, Edelstahlfasern, Carbonnanotubes und Ruß. Geeignete Endgruppenfunktionalisierer sind beispielsweise Terephthalsäure, Adipinsäure und Propionsäure. Geeignete Farbstoffe und Farbpigmente sind beispielsweise Ruß und Eisenchromoxide.

Ein geeignetes Antioxidationsmittel ist beispielsweise Irganox® 245 der BASF SE oder Lotader® AX8900 der Firma Arkema.

Enthält das Sinterpulver die Komponente (C), so enthält es mindestens 0,1 Gew.-% der Komponente (C), bevorzugt mindestens 1 Gew.-% der Komponente (C), bezogen auf die Summe der Gewichtsprozente der Komponenten (A), (C) und gegebenenfalls (B) und/oder (D), bevorzugt bezogen auf das Gesamtgewicht des Sinterpulvers (SP).

Enthält das Sinterpulver die Komponente (C), so enthält es weiterhin höchstens 20 Gew.-% der Komponente (C), bezogen auf die Summe der Gewichtsprozente der Komponenten (A), (C) und gegebenenfalls (B) und/oder (D), bevorzugt bezogen auf das Gesamtgewicht des Sinterpulvers (SP).

Komponente (D)

Erfindungsgemäß ist die gegebenenfalls enthaltene Komponente (D) mindestens ein Verstärkungsmittel.

"Mindestens ein Verstärkungsmittel" bedeutet im Rahmen der vorliegenden Erfindung sowohl genau ein Verstärkungsmittel als auch eine Mischung aus zwei oder mehreren Verstärkungsmitteln.

Unter einem Verstärkungsmittel wird im Rahmen der vorliegenden Erfindung ein Material verstanden, das die mechanischen Eigenschaften von mit dem erfindungsgemäßen Verfahren hergestellten Formkörpern verbessert gegenüber Formkörpern, die das Verstärkungsmittel nicht enthalten.

Verstärkungsmittel als solche sind dem Fachmann bekannt. Die Komponente (D) kann beispielsweise kugelförmig, plättchenförmig oder faserförmig sein.

Bevorzugt ist das mindestens eine Verstärkungsmittel plättchenförmig oder faserförmig.

Unter einem "faserförmigen Verstärkungsmittel" wird ein Verstärkungsmittel verstanden, bei dem das Verhältnis von Länge des faserförmigen Verstärkungsmittels zum Durchmesser des faserförmigen Verstärkungsmittels im Bereich von 2 : 1 bis 40 : 1 liegt, bevorzugt im Bereich von 3 : 1 bis 30 : 1 und insbesondere bevorzugt im Bereich von 5:1 bis 20 : 1, wobei die Länge des faserförmigen Verstärkungsmittels und der Durchmesser des faserförmigen Verstärkungsmittels bestimmt werden durch Mikroskopie mittels Bildauswertung an Proben nach Veraschung, wobei mindestens 70 000 Teile des faserförmigen Verstärkungsmittels nach Veraschung ausgewertet werden.

Die Länge des faserförmigen Verstärkungsmittels liegt dann üblicherweise im Bereich von 5 bis 1000 $\mu$m, bevorzugt im Bereich von 10 bis 600 $\mu$m und insbesondere bevorzugt im Bereich von 20 bis 200 $\mu$m, bestimmt mittels Mikroskopie mit Bildauswertung nach Veraschung.

Der Durchmesser liegt dann beispielsweise im Bereich von 1 bis 30 $\mu$m, bevorzugt im Bereich von 2 bis 20 $\mu$m und insbesondere bevorzugt im Bereich von 5 bis 15 $\mu$m, bestimmt mittels Mikroskopie mit Bildauswertung nach Veraschung.

Das mindestens eine Verstärkungsmittel ist in einer weiteren bevorzugten Ausführungsform plättchenförmig. Unter "plättchenförmig" wird im Rahmen der vorliegenden Erfindung verstanden, dass die Partikel des mindestens einen Verstärkungsmittels ein Verhältnis von Durchmesser zu Dicke im Bereich von 4 : 1 bis 10 : 1 aufweisen, bestimmt mittels Mikroskopie mit Bildauswertung nach Veraschung.

Geeignete Verstärkungsmittel sind dem Fachmann bekannt und beispielsweise ausgewählt aus der Gruppe bestehend aus Carbonnanotubes, Kohlenstofffasern, Borfasern, Glasfasern, Glaskugeln, Kieselsäurefasern, Keramikfasern, Basaltfasern, Aluminiumsilikaten, Aramidfasern und Polyesterfasern.

Bevorzugt ist das mindestens eine Verstärkungsmittel ausgewählt aus der Gruppe bestehend aus Aluminiumsilikaten, Glasfasern, Glaskugeln, Kieselsäurefasern und Kohlenstofffasern.

Besonders bevorzugt ist das mindestens eine Verstärkungsmittel ausgewählt aus der Gruppe bestehend aus Aluminiumsilikaten, Glasfasern, Glaskugeln und Kohlenstofffasern. Diese Verstärkungsmittel können zudem epoxyfunktionalisiert sein.

Geeignete Kieselsäurefasern sind beispielsweise Wollastonit und Halloysit.

Geeignete Aluminiumsilikate sind dem Fachmann als solche bekannt. Als Aluminiumsilikate werden Verbindungen bezeichnet, die $Al_2O_3$ und $SiO_2$ enthalten. Strukturell ist den Aluminiumsilikaten gemeinsam, dass die Siliziumatome tetraedrisch von Sauerstoffatomen koordiniert sind und die Aluminiumatome oktaedrisch von Sauerstoffatomen koordiniert sind. Aluminiumsilikate können darüber hinaus weitere Elemente enthalten.

Bevorzugt als Aluminiumsilikate sind Schichtsilikate. Besonders bevorzugt als Aluminiumsilikate sind kalzinierte Aluminiumsilikate, insbesondere bevorzugt sind kalzinierte Schichtsilikate. Das Aluminiumsilikat kann zudem epoxyfunktionalisiert sein.

Ist das mindestens eine Verstärkungsmittel ein Aluminiumsilikat, kann das Aluminiumsilikat in beliebiger Form eingesetzt werden. Beispielsweise kann es als reines Aluminiumsilikat eingesetzt werden, ebenso ist es möglich, dass das Aluminiumsilikat als Mineral eingesetzt wird. Bevorzugt wird das Aluminiumsilikat als Mineral eingesetzt. Geeignete Aluminiumsilikate sind beispielsweise Feldspate, Zeolite, Sodalith, Sillimanit, Andalusit und Kaolin. Kaolin ist als Aluminiumsilikat bevorzugt.

Kaolin gehört zu den Tongesteinen und enthält im Wesentlichen das Mineral Kaolinit. Die Summenformel von Kaolinit ist $Al_2[(OH)_4/Si_2O_5]$. Kaolinit ist ein Schichtsilikat. Kaolin enthält neben Kaolinit üblicherweise noch weitere Verbindungen wie beispielsweise Titandioxid, Natriumoxide und Eisenoxide. Erfindungsgemäß bevorzugtes Kaolin enthält mindestens 98 Gew.-% Kaolinit, bezogen auf das Gesamtgewicht des Kaolins.

Enthält das Sinterpulver die Komponente (D), so enthält es bevorzugt mindestens 5 Gew.-% der Komponente (D), mehr bevorzugt mindestens 10 Gew.-% der Komponente (D), bezogen auf die Summe der Gewichtsprozente der Komponenten (A), (D) und gegebenenfalls (B) und/oder (C), bevorzugt bezogen auf das Gesamtgewicht des Sinterpulvers (SP).

Enthält das Sinterpulver die Komponente (D), so enthält es weiterhin bevorzugt höchstens 40 Gew.-% der Komponente (D), bezogen auf die Summe der Gewichtsprozente der Komponenten (A), (D) und gegebenenfalls (B) und/oder (C), bevorzugt bezogen auf das Gesamtgewicht des Sinterpulvers (SP).

## Verfahren zur Herstellung der Formkörper

Ein weiterer Gegenstand der vorliegenden Erfindung ist ein Verfahren zur Herstellung eines Formkörpers umfassend die Schritte:

a) Bereitstellen einer Schicht des Sinterpulvers (SP) gemäß einem der Ansprüche 1 bis 9,

b) gegebenenfalls Aufwärmen der Schicht bis maximal 2 K unterhalb der Schmelztemperatur $T_M$ des Sinterpulvers (SP),

c) Belichten der in Schritt a) bereitgestellten oder gegebenenfalls der in Schritt b) erwärmten Schicht des Sinterpulvers (SP), bevorzugt in einem Sinterverfahren, mehr bevorzugt in einem selektiven Lasersinterverfahren, in einem High-Speed Sinter-Verfahren (HSS) oder einem Multijet-Fusion-Verfahren (MJF).

In Schritt c) wird die in Schritt a) oder gegebenenfalls Schritt b) bereitgestellte Schicht des Sinterpulvers (SP) belichtet.

Beim Belichten schmilzt zumindest ein Teil der Schicht des Sinterpulvers (SP) auf. Das aufgeschmolzene Sinterpulver (SP) fließt ineinander und bildet eine homogene Schmelze. Nach dem Belichten kühlt der aufgeschmolzene Teil der Schicht des Sinterpulvers (SP) wieder ab und die homogene Schmelze erstarrt wieder.

Zur Belichtung eignen sich alle dem Fachmann bekannten Methoden. Bevorzugt erfolgt das Belichten in Schritt c) mit einer Strahlungsquelle. Die Strahlungsquelle ist bevorzugt ausgewählt aus der Gruppe bestehend aus Infrarotstrahlern und Lasern. Als Infrarotstrahler sind Nahinfrarot-Strahler insbesondere bevorzugt.

Gegenstand der vorliegenden Erfindung ist daher auch ein Verfahren, bei dem das Belichten in Schritt c) mit einer Strahlungsquelle erfolgt, die ausgewählt ist aus der Gruppe bestehend aus Lasern und Infrarotstrahlern.

Geeignete Laser sind dem Fachmann bekannt und beispielsweise Halbleiter-Faserlaser, Festkörperlaser, zum Beispiel Nd:YAG Laser (Neodym-dotierter Yttrium-Aluminium-Granat-Laser), oder Kohlendioxidlaser. Der Kohlendioxidlaser hat üblicherweise eine Wellenlänge von 10,6 $\mu$m. Andere einsetzbare Laser emittieren Strahlung im Bereich von 350 bis 2500 nm.

Wird als Strahlungsquelle beim Belichten in Schritt c) ein Laser eingesetzt, so wird üblicherweise die in Schritt a) oder gegebenenfalls Schritt b) bereitgestellte Schicht des Sinterpulvers (SP) mit dem Laserstrahl lokal und kurzzeitig belichtet. Dabei werden nur die Teile des Sinterpulvers (SP), die vom Laserstrahl belichtet worden sind, selektiv aufgeschmolzen. Wird in Schritt c) ein Laser eingesetzt, wird das erfindungsgemäße Verfahren auch als selektives Lasersintern bezeichnet. Das selektive Lasersintern ist dem Fachmann als solches bekannt.

Wird als Strahlungsquelle beim Belichten in Schritt c) ein Infrarot-Strahler, insbesondere ein Nahinfrarot-Strahler eingesetzt, so liegt die Wellenlänge, mit der die Strahlungsquelle strahlt, üblicherweise im Bereich von 680 nm bis 3000 nm, bevorzugt im Bereich von 750 nm bis 1500 nm und insbesondere im Bereich von 880 nm bis 1100 nm.

Beim Belichten in Schritt c) wird dann üblicherweise die gesamte Schicht des Sinterpulvers (SP) belichtet. Damit beim Belichten nur die gewünschten Bereiche des Sinterpulvers (SP) aufschmelzen, wird üblicherweise eine Infrarot-absorbierende Tinte (IR-absorbierende Tinte) auf die Bereiche aufgebracht, die aufschmelzen sollen.

Das Verfahren zur Herstellung des Formkörpers umfasst dann bevorzugt zwischen Schritt a) und gegebenenfalls zwischen Schritt b) oder Schritt c) einen Schritt a-1), Aufbringen mindestens einer IR-absorbierenden Tinte, auf zumindest einen Teil der in Schritt a) bereitgestellten Schicht des Sinterpulvers (SP).

Ein weiterer Gegenstand der vorliegenden Erfindung ist daher auch ein Verfahren zur Herstellung eines Formkörpers, umfassend die Schritte

    a) Bereitstellen einer Schicht eines Sinterpulvers (SP) enthaltend die nachfolgenden Komponenten (A) sowie gegebenenfalls (B), (C) und/oder (D):

        (A) mindestens einen teilkristallinen Terephthalat-Polyester, der hergestellt wird durch Umsetzung mindestens der Komponenten (a) und (b):

            (a) mindestens einer aromatischen Dicarbonsäure und

            (b) mindestens zweier aliphatischer Diole (b1) und (b2), wobei das aliphatische Diol (b1) Neopentylglycol ist und das aliphatische Diol (b2) ein lineares Diol gemäß der allgemeinen Formel (I)

$$HO\text{-}(CH_2)_n\text{-}OH \qquad (I)$$

            ist, in der n 2, 3, 4, 5 oder 6 bedeutet,

        (B) gegebenenfalls mindestens ein weiteres Polymer

        (C) gegebenenfalls mindestens ein Additiv und/oder

        (D) gegebenenfalls mindestens ein Verstärkungsmittel,

    a-1) Aufbringen mindestens einer IR-absorbierenden Tinte auf zumindest einen Teil der in Schritt a) bereitgestellten Schicht des Sinterpulvers (SP)

    b) gegebenenfalls Aufwärmen der Schicht bis maximal 2 K unterhalb der Schmelztemperatur $T_M$ des Sinterpulvers (SP),

c) Belichten der in Schritt a) bereitgestellten oder gegebenenfalls der in Schritt b) erwärmten Schicht des Sinterpulvers (SP).

Als IR-absorbierende Tinten eignen sich alle dem Fachmann bekannten IR-absorbierenden Tinten, insbesondere dem Fachmann bekannte IR-absorbierende Tinte für das High Speed Sintern.

IR-absorbierende Tinten enthalten üblicherweise zumindest einen Absorber, der IR-Strahlung, bevorzugt NIR-Strahlung (Nahinfrarot Strahlung) absorbiert. Beim Belichten der Schicht des Sinterpulvers (SP) in Schritt c) wird durch die Absorption der IR-Strahlung, bevorzugt der NIR-Strahlung, durch den in der IR-absorbierenden Tinten enthaltenen IR-Absorber der Teil der Schicht des Sinterpulvers (SP), auf den die IR-absorbierende Tinte aufgebracht worden ist, selektiv erwärmt.

Die IR-absorbierende Tinte kann neben dem zumindest einen Absorber eine Trägerflüssigkeit enthalten. Geeignete Trägerflüssigkeiten sind dem Fachmann bekannt und beispielsweise Öle oder Lösungsmittel.

Der zumindest eine Absorber kann in der Trägerflüssigkeit gelöst oder dispergiert vorliegen.

Erfolgt die Belichtung in Schritt c) mit einer Strahlungsquelle, die ausgewählt ist aus Infrarot-Strahlern und wird Schritt a-1) durchgeführt, dann wird das erfindungsgemäße Verfahren auch als *High-Speed Sintering (HSS)* oder *Multijet-Fusion-Verfahren (MJF)* bezeichnet. Diese Verfahren sind dem Fachmann als solche bekannt.

Im Anschluss an den Schritt c) wird die Schicht des Sinterpulvers (SP) üblicherweise um die Schichtdicke der in Schritt a) bereitgestellten Schicht des Sinterpulvers (SP) abgesenkt und eine weitere Schicht des Sinterpulvers (SP) aufgebracht. Diese wird anschließend gegebenenfalls gemäß Schritt b) erneut erwärmt und gemäß Schritt c) erneut belichtet.

Dadurch verbindet sich zum einen die obere Schicht des Sinterpulvers (SP) mit der unteren Schicht des Sinterpulvers (SP), außerdem verbinden sich die Partikel des Sinterpulvers (SP) innerhalb der oberen Schicht durch Aufschmelzen miteinander.

Im erfindungsgemäßen Verfahren können die Schritte a) bis c) sowie gegebenenfalls a-1) also wiederholt werden.

Indem das Absenken des Pulverbetts, das Aufbringen des Sinterpulvers (SP) und das Belichten und damit das Aufschmelzen des Sinterpulvers (SP) wiederholt werden, werden dreidimensionale Formkörper hergestellt. Es ist möglich, Formkörper herzustellen, die beispielsweise auch Hohlräume aufweisen. Ein zusätzliches Stützmaterial ist nicht notwendig, da das nicht aufgeschmolzene Sinterpulver (SP) selbst als Stützmaterial fungiert.

Ein weiterer Gegenstand der vorliegenden Erfindung ist daher auch ein Formkörper erhältlich nach dem erfindungsgemäßen Verfahren.

Bei dem erfindungsgemäßen Verfahren von besonderer Bedeutung ist der Schmelzbereich des Sinterpulvers (SP), das sogenannte Sinterfenster ($W_{SP}$) des Sinterpulvers (SP).

Das Sinterfenster ($W_{SP}$) des Sinterpulvers (SP) kann beispielsweise durch dynamische Differenzkalorimetrie (DDK; Differential Scanning Calorimetry, DSC) bestimmt werden.

Bei der dynamischen Differenzkalorimetrie werden die Temperatur einer Probe, im vorliegenden Fall also einer Probe des Sinterpulvers (SP), und die Temperatur einer Referenz linear mit der Zeit geändert. Dazu wird der Probe und der Referenz Wärme zugeführt bzw. aus diesen abgeführt. Es wird die Wärmemenge Q bestimmt, die notwendig ist, um die Probe auf der gleichen Temperatur wie die Referenz zu halten. Als Referenzwert dient die der Referenz zugeführte bzw. abgeführte Wärmemenge QR.

Geht die Probe eine endotherme Phasenumwandlung ein, so muss eine zusätzliche Wärmemenge Q zugeführt werden, um die Probe auf der gleichen Temperatur wie die Referenz zu halten. Findet eine exotherme Phasenumwandlung statt, so muss eine Wärmemenge Q abgeführt werden, um die Probe auf der gleichen Temperatur wie die Referenz zu halten. Die Messung liefert ein DSC-Diagramm, in dem die Wärmemenge Q, die der Probe zugeführt bzw. aus dieser abgeführt wird, in Abhängigkeit von der Temperatur T aufgetragen wird.

Üblicherweise wird bei der Messung zunächst ein Heizlauf (H) durchgeführt, das heißt, die Probe und die Referenz werden linear erwärmt. Während des Schmelzens der Probe (Phasenumwandlung fest/flüssig), muss eine zusätzliche Wärmemenge Q zugeführt werden, um die Probe auf der gleichen Temperatur wie die Referenz zu halten. Im DSC-Diagramm wird dann ein Peak beobachtet, der sogenannte Aufschmelzpeak.

Im Anschluss an den Heizlauf (H) wird üblicherweise ein Kühllauf (K) gemessen. Dabei werden die Probe und die Referenz linear abgekühlt, es wird also Wärme aus der Probe und der Referenz abgeführt. Während der Kristallisation bzw. Erstarrung der Probe (Phasenumwandlung flüssig/fest) muss eine größere Wärmemenge Q abgeführt werden, um die Probe auf der gleichen Temperatur wie die Referenz zu halten, da bei der Kristallisation bzw. dem Erstarren Wärme frei wird. In dem DSC Diagramm des Kühllaufs (K) wird dann ein Peak, der sogenannte Kristallisationspeak, in entgegengesetzter Richtung zu dem Aufschmelzpeak beobachtet.

Im Rahmen der vorliegenden Erfindung erfolgt das Erwärmen während des Heizlaufs üblicherweise mit einer Heizrate im Bereich von 5 bis 25 K/min, vorzugsweise bei einer Heizrate im Bereich von 5 bis 15 K/min. Das Abkühlen während des Kühllaufs erfolgt im Rahmen der vorliegenden Erfindung üblicherweise mit einer Kühlrate im Bereich von 5 bis 25 K/min, vorzugsweise bei einer Kühlrate im Bereich von 5 bis 15 K/min.

Ein DSC-Diagramm mit einem Heizlauf (H) und einem Kühllauf (K) mit einer Heizrate bzw. Kühlrate im Bereich von 5 bis 15 K ist exemplarisch in Figur 1 dargestellt. Anhand des DSC-Diagramms können die Onset Temperatur des Aufschmelzens ($T_M^{onset}$) und die Onset-Temperatur der Kristallisation ($T_C^{onset}$) bestimmt werden.

Zur Bestimmung der Onset-Temperatur des Aufschmelzens ($T_M^{onset}$) wird eine Tangente an die Basislinie des Heizlaufs (H), die bei den Temperaturen unterhalb des Aufschmelzpeaks verläuft, angelegt. Eine zweite Tangente wird an den ersten Wendepunkt des Aufschmelzpeaks angelegt, der bei Temperaturen unterhalb der Temperatur am Maximum des Aufschmelzpeaks liegt. Die beiden Tangenten werden so weit extrapoliert, dass sie sich schneiden. Die senkrechte Extrapolation des Schnittpunkts auf die Temperaturachse gibt die Onset-Temperatur des Aufschmelzens ($T_M^{onset}$) an.

Zur Bestimmung der Onset-Temperatur der Kristallisation ($T_C^{onset}$) wird eine Tangente an die Basislinie des Kühllaufs (K), die bei den Temperaturen oberhalb des Kristallisationspeaks verläuft, angelegt. Eine zweite Tangente wird an den Wendepunkt des Kristallisationspeaks angelegt, der bei Temperaturen oberhalb der Temperatur am Minimum des Kristallisationspeaks liegt. Die beiden Tangenten werden so weit extrapoliert, dass sie sich schneiden. Die senkrechte Extrapolation des Schnittpunkts auf die Temperaturachse gibt die Onset-Temperatur der Kristallisation ($T_C^{onset}$) an.

Das Sinterfenster (W) ergibt sich aus der Differenz zwischen der Onset-Temperatur des Aufschmelzens ($T_M^{onset}$) und der Onset-Temperatur der Kristallisation ($T_C^{onset}$). Es gilt also:

$$W = T_M^{onset} - T_C^{onset}.$$

Im Rahmen der vorliegenden Erfindung haben die Begriffe "Sinterfenster ($W_{SP}$)", "Größe des Sinterfensters (WSP)" und "Differenz zwischen der Onset-Temperatur des Aufschmelzens ($T_M^{onset}$) und der Onset-Temperatur der Kristallisation ($T_C^{onset}$)" die gleiche Bedeutung und werden synonym gebraucht.

Das erfindungsgemäße Sinterpulver (SP) eignet sich besonders gut zur Verwendung in einem Sinterverfahren.

Gegenstand der vorliegenden Erfindung ist daher auch die Verwendung eines Sinterpulvers (SP) enthaltend die nachfolgenden Komponenten (A) sowie gegebenenfalls (B), (C) und/oder (D):

(A) mindestens einen teilkristallinen Terephthalat-Polyester, der hergestellt wird durch Umsetzung mindestens der Komponenten (a) und (b):

(a) mindestens einer aromatischen Dicarbonsäure und

(b) mindestens zweier aliphatischer Diole (b1) und (b2), wobei das aliphatische Diol (b1) Neopentylglycol ist und das aliphatische Diol (b2) ein lineares Diol gemäß der allgemeinen Formel (I)

$$HO-(CH_2)_n-OH \qquad (I)$$

ist, in der n 2, 3, 4, 5 oder 6 bedeutet,

(B) mindestens ein weiteres Polymer,
(C) gegebenenfalls mindestens ein Additiv und/oder
(D) gegebenenfalls mindestens ein Verstärkungsmittel,

in einem Sinterverfahren, bevorzugt in einem selektiven Lasersinterverfahren, in einem High-Speed Sinter-Verfahren (HSS) oder einem Multijet-Fusion-Verfahren (MJF).

Formkörper

Durch das erfindungsgemäße Verfahren wird ein Formkörper erhalten. Der Formkörper kann direkt nach dem Erstarren des beim Belichten in Schritt c) aufgeschmolzenen Sinterpulvers (SP) aus dem Pulverbett entnommen werden. Ebenso ist es möglich, den Formkörper erst abzukühlen und dann erst aus dem Pulverbett zu entnehmen. Gegebenenfalls anhaftende Partikel des Sinterpulvers, die nicht aufgeschmolzen worden sind, können mechanisch nach bekannten Verfahren von der Oberfläche entfernt werden. Verfahren zur Oberflächenbehandlung des Formkörpers umfassen beispielsweise das Gleitschleifen oder Gleitspanen sowie Sandstrahlen, Glaskugelstrahlen oder Mikrostrahlen.

Es ist außerdem möglich, die erhaltenen Formkörper weiterzuverarbeiten oder beispielsweise die Oberfläche zu behandeln.

Ein weiterer Gegenstand der vorliegenden Erfindung ist daher ein Formkörper, erhältlich nach dem erfindungsgemäßen Verfahren.

Die erhaltenen Formkörper enthalten üblicherweise im Bereich von 15 bis 100 Gew.-% der Komponente (A), im Bereich von 0 bis 25 Gew.-% der Komponente (B), im Bereich von 0 bis 20 Gew.-% der Komponente (C) und im Bereich von 0 bis 40 Gew.-% der Komponente (D), jeweils bezogen auf das Gesamtgewicht des Formkörpers.

In einer bevorzugten Ausführungsform enthält der Formkörper im Bereich von 15 bis 95 Gew.-% der Komponente (A), im Bereich von 0 bis 25 Gew.-% der Komponente (B), im Bereich von 0 bis 20 Gew.-% der Komponente (C) und im Bereich von 5 bis 40 Gew.-% der Komponente (D), jeweils bezogen auf das Gesamtgewicht des Formkörpers.

In einer alternativen bevorzugten Ausführungsform enthält der Formkörper

im Bereich von 15 bis 98,9 Gew.-%, bevorzugt im Bereich von 17 bis 92 Gew.-%, der Komponente (A),

im Bereich von 1 bis 25 Gew.-%, bevorzugt im Bereich von 2 bis 23 Gew.-%, der Komponente (B),

im Bereich von 0,1 bis 20 Gew.-%, bevorzugt im Bereich von 1 bis 20 Gew.-%, der Komponente (C) und

im Bereich von 0 bis 40 Gew.-%, bevorzugt im Bereich von 5 bis 40 Gew.-%, der Komponente (D),

jeweils bezogen auf das Gesamtgewicht des Formkörpers.

Im Allgemeinen handelt es sich bei der Komponente (A) um die Komponente (A), die im Sinterpulver (SP) enthalten war. Ebenso handelt es sich bei der Komponente (B) um die Komponente (B), die im Sinterpulver (SP) enthalten war, bei der Komponente (C) um die Komponente (C), die im Sinterpulver (SP) enthalten war und bei der Komponente (D) um die Komponente (D), die im Sinterpulver (SP) enthalten war.

Wenn Schritt a-1) durchgeführt worden ist, enthält der Formkörper zudem üblicherweise die IR-absorbierende Tinte.

Dem Fachmann ist klar, dass durch die Belichtung des Sinterpulvers (SP) die Komponenten (A) sowie gegebenenfalls (B), (C) und (D) chemische Reaktionen eingehen können und sich dadurch verändern können. Derartige Reaktionen sind dem Fachmann bekannt.

Bevorzugt gehen die Komponenten (A) sowie gegebenenfalls (B), (C) und (D) beim Belichten in Schritt c) keine chemische Reaktion ein, sondern das Sinterpulver (SP) schmilzt lediglich auf.

Der erhaltenen Formkörper weist vorzugsweise ein Zug-E-Modul, bestimmt gemäß ISO 527-1:2012, von mindestens 1000 MPa, mehr bevorzugt von mindestens 1400 MPa, und besonders bevorzugt von mindestens 1800 MPa, auf.

Des Weiteren weist der erhaltene Formkörper vorzugsweise eine Zugfestigkeit, bestimmt gemäß ISO 527-1:2012, von mindestens 15 MPa, mehr bevorzugt von mindestens 20 MPa, und besonders bevorzugt von mindestens 25 MPa, auf.

In einer weiteren Ausführungsform der vorliegenden Erfindung enthält das Sinterpulver (SP) die nachfolgenden Komponenten (A) sowie gegebenenfalls (B), (C) und/oder (D):

(A) mindestens einen teilkristallinen Terephthalat-Polyester, der hergestellt wird durch Umsetzung mindestens der Komponenten (a) und (b):

(a) mindestens einer aromatischen Dicarbonsäure und
(b) mindestens zweier aliphatischer Diole (b1) und (b2), wobei das aliphatische Diol (b1) Neopentylglycol ist,

(B) gegebenenfalls mindestens ein weiteres Polymer,

(C) gegebenenfalls mindestens ein Additiv und/oder

(D) gegebenenfalls mindestens ein Verstärkungsmittel.

Vorzugsweise liegt das molare Verhältnis der Komponente (a) zu der Komponente (b1) bei der Herstellung des mindestens einen teilkristallinen Terephthalat-Polyesters (A) im Bereich von 1 : 0,1 bis 1 : 0,75 [mol/mol]. Die oben genannten Ausführungsformen und Bevorzugungen betreffend das Sinterpulver (SP) gemäß Anspruch 1 gelten hier analog.

Nachfolgend wird die Erfindung anhand von Beispielen näher erläutert, ohne sie hierauf zu beschränken.

Beispiele

Es werden die folgenden Komponenten eingesetzt:

*Teilkristalliner Terephthalat-Polyester*

- *Komponente (A) in den erfindungsgemäßen Beispielen B1, B2, B4, B5, B6 und B7*
  Terephthalat-Polyester Advanite 53001 (Granulat; Sasa Polyester Sanayi A.S., Türkei), hergestellt durch Umsetzung der Komponenten (a), (b1) und (b2):

    52,4 mol-% Terephthalsäure (Komponente (a)), bezogen auf die Gesamtmenge der Komponenten (a), (b1) und (b2),

    12,2 mol-% Neopentylglycol (Komponente (b1)), bezogen auf die Gesamtmenge der Komponenten (a), (b1) und (b2) und

    35,4 mol-% Butandiol (Komponente (b2)), bezogen auf die Gesamtmenge der Komponenten (a), (b1) und (b2).

- *Teilkristalliner Terephthalat-Polyester im Vergleichsbeispiel VB3*
  Polybutylenterephthalat Ultradur B4500 (Granulat; BASF SE), hergestellt durch Umsetzung der Komponenten (a) und (b2):

    50 mol-% Terephthalsäure bzw. Dimethyl-Terephthalat (entspricht Komponente (a)), bezogen auf die Gesamtmenge der Komponenten (a) und (b2) und

    50 mol-% 1,4-Butandiol (entspricht Komponente (b2)), bezogen auf die Gesamtmenge der Komponenten (a) und (b2).

*Weiteres Polymer (Komponente (B))in den erfindungsgemäßen Beispielen B6 und B7*

- Polycaprolacton Capa® 6500 (Granulat; Perstorp)

*Additiv (Komponente (C)) in den erfindungsgemäßen Beispielen B6 und B7*

- Antioxidationsmittel Irganox® 245 (BASF SE; sterisch gehindertes Phenol)

*Verstärkungsmittel (Komponente (D)) in den erfindungsgemäßen Beispielen B4 und B5*

- Glaskugeln (Spheriglass® 2000 CP0202; Potters; B4)

- Wollastonit (TREMINO 939-300 EST; HPF; B5)

*Rieselhilfe*

- Aeroxide® Alu C (Evonik)

Messmethoden:

Die Schmelzenthalpien $\Delta H1$ und $\Delta H2$, die Schmelztemperatur ($T_{M1}$) sowie die Glasübergangstemperatur ($T_{G2}$) wurden jeweils mittels dynamischer Differenzkalorimetrie bestimmt.

Zur Bestimmung der Schmelztemperatur ($T_{M1}$) und der ersten Schmelzenthalpie $\Delta H1$ wurde wie vorstehend beschrieben ein erster Heizlauf (H1) mit einer Heizrate von 20 K/min gemessen. Zur Bestimmung der zweiten Schmelzenthalpie $\Delta H2$ wurde wie vorstehend beschrieben ein zweiter Heizlauf (H2) mit einer Heizrate von 20 K/min gemessen. Die Schmelztemperatur ($T_{M1}$) entsprach dann der Temperatur am Maximum des Aufschmelzpeaks des Heizlaufs (H1). Die Schmelzenthalpien $\Delta H1_{(SP)}$ und $\Delta H2_{(SP)}$ des Sinterpulvers (SP) sind proportional zu der Fläche unter dem Aufschmelzpeak des ersten Heizlaufs (H1) beziehungsweise des zweiten Heizlaufs (H2) des DSC-Diagramms.

Zur Bestimmung der Glasübergangstemperatur ($T_{G2}$) wurde im Anschluss an den ersten Heizlauf (H1) ein Kühllauf (K) und daran anschließend ein zweiter Heizlauf (H2) gemessen. Der Kühllauf wurde mit einer Kühlrate von 20 K/min gemessen, der erste Heizlauf (H1) und der zweite Heizlauf (H2) wurden mit einer Heizrate von 20 K/min gemessen. Die Glasübergangstemperatur ($T_{G2}$) wurde dann wie vorstehend beschrieben auf halber Höhe der Stufe des zweiten Heizlaufs (H2) bestimmt.

Die Kristallisationstempertur ($T_C$) wurde mittels dynamischer Differenzkalorimetrie bestimmt. Dazu wurden zunächst ein Heizlauf (H) mit einer Heizrate von 20 K/min und anschließend ein Kühllauf (K) mit einer Kühlrate von 20 K/min gemessen. Die Kristallisationstemperatur ($T_C$) ist die Temperatur am Extremum des Kristallisationspeaks.

Die komplexe Scherviskosität wurde anhand von frisch hergestellten Sinterpulvern bestimmt. Die Viskositätsmessung erfolgte dabei mittels Rotationsrheologie bei einer Messfrequenz von 0,5 rad/s bei einer Temperatur von 190°C (B1, B2, B6 und B7) bzw. 240 °C (VB3).

Herstellung der Sinterpulver

*Erfindungsgemäße Beispiele B1, B2, B4 und B5 sowie Vergleichsbeispiel VB3*

Die Granulate der teilkristallinen Terephthalat-Polyester wurden jeweils unter Kühlung mit flüssigem Stickstoff in einer Stiftmühle auf eine Partikelgröße (D50-Wert) im Bereich kleiner 150 $\mu$m vermahlen unter Erhalt eines Terephthalat-Polyesterpulvers. Das erhaltene Terephthalat-Polyesterpulver wurde mit 0,2 Gew.-% Rieselhilfe, bezogen auf das Gesamtgewicht des Terephthalat-Polyesterpulvers und der Rieselhilfe, beziehungsweise, bezogen auf das Gesamtgewicht des Sinterpulvers, gemischt unter Erhalt des Sinterpulvers (SP).

Im erfindungsgemäßen Beispiel B2 wurde das erhaltene Sinterpulver (SP) anschließend bei einer Temperatur von 120°C für 20 Stunden in einem Trockenschrank unter Vakuum, unter Erhalt eines getemperten Sinterpulvers (SP), getempert. Im erfindungsgemäßen Beispiel B1 wurde das Sinterpulver (SP) nicht getempert. In den erfindungsgemäßen Beispielen B4 und B5 wurden nach dem Tempern des Sinterpulvers ein Verstärkungsmittel (Komponente (D)), Glaskugeln (B4) und Wollastonit (B5), zugemischt. Die Zusammensetzungen der Sinterpulver (SP) und der getemperten Sinterpulver (SP) sind in den Tabellen 1 und 2, die physikalischen Eigenschaften der Sinterpulver (SP) und der getemperten Sinterpulver (SP) sind in den Tabellen 4 und 5 wiedergegeben.

*Erfindungsgemäße Beispiele B6 und B7*

Die Granulate des teilkristallinen Terephthalat-Polyesters (Komponente (A)) und des weiteren Polymers (Komponete (B); Polycaprolacton) sowie das Antioxidationsmittel (Komponente (C)) wurden in den in der Tabelle 3 angegebenen Mengen in einem Extruder unter Erhalt eines Extrudats (E) gemischt und anschließend pelletiert unter Erhalt eines Granulats (G). Anschließend wurde das Granulat (G) unter Kühlung mit flüssigem Stickstoff in einer Stiftmühle auf eine Partikelgröße (D50-Wert) im Bereich kleiner 150 $\mu$m vermahlen unter Erhalt des Sinterpulvers (SP). In den erfindungsgemäßen Beispielen B6 und B7 wurde das Sinterpulver (SP) nicht getempert. Die physikalischen Eigenschaften der Sinterpulver (SP) sind in den Tabellen 4 und 5 wiedergegeben.

Tabelle 1

| Beispiel / Vergleichs- beispiel | Terephthalat- Polyester- Pulver [Gew.%]* | Komponente (a) [mol-%]** | Komponente (b1) [mol-%]** | Komponente (b2) [mol-%]** | Rieselhilfe [Gew.%]* |
|---|---|---|---|---|---|
| B1 | 99,8 | 52,4 | 12,2 | 35,4 | 0,2 |
| B2 | 99,8 | 52,4 | 12,2 | 35,4 | 0,2 |
| VB3 | 99,8 | 50 | - | 50 | 0,2 |

\*      bezogen auf das Gesamtgewicht des Sinterpulvers

\*\*      bezogen auf die Gesamtmenge der Komponenten (a), (b1) und (b2)

Tabelle 2

| Beispiel / Vergleichs- beispiel | Terephthalat- Polyester-Pulver [Gew.%]* | Komponente (a) [mol-%]** | Komponente (b1) [mol-%]** | Komponente (b2) [mol-%]** | Rieselhilfe [Gew.%]* | Verstärkungs- mittel [Gew.-%]* |
|---|---|---|---|---|---|---|
| B4 | 82,83 | 52,4 | 12,2 | 35,4 | 0,17 | 17 |
| B5 | 82,83 | 52,4 | 12,2 | 35,4 | 0,17 | 17 |

\*      bezogen auf das Gesamtgewicht des Sinterpulvers

\*\*      bezogen auf die Gesamtmenge der Komponenten (a), (b1) und (b2)

Tabelle 3

| Beispiel / Vergleichs- beispiel | Komponente (A) [Gew.%]* | Komponente (a) [mol-%]** | Komponente (b1) [mol-%]** | Komponente (b2) [mol-%]** | Komponente (B) [Gew.%]* | Komponente (C) [Gew.%]* |
|---|---|---|---|---|---|---|
| B6 | 97,25 | 52,4 | 12,2 | 35,4 | 2,5 | 0,25 |
| B7 | 94,75 | 52,4 | 12,2 | 35,4 | 5,0 | 0,25 |

\*      bezogen auf das Gesamtgewicht des Sinterpulvers

\*\*      bezogen auf die Gesamtmenge der Komponenten (a), (b1) und (b2)

Tabelle 4

| Beispiel/ Vergleichsbeispiel | D10 [μm] | D50 [μm] | D90 [μm] |
|---|---|---|---|
| B1 | 37 | 62 | 101 |
| B2 | 37 | 62 | 101 |
| VB3 | 30,7 | 61,5 | 115,6 |

(fortgesetzt)

| Beispiel/ Vergleichsbeispiel | D10 [μm] | D50 [μm] | D90 [μm] |
|---|---|---|---|
| B6 | | | |
| B7 | | | |

Tabelle 5

| Beispiel / Vergleichs-beispiel | Komplexe Scherviskosität bei 0.5 rad/s [Pas] | $T_{M1}$ [°C] | $T_{G2}$ [°C] | $T_C$ [°C] | $\Delta H_1$ [J/g] | $\Delta H_2$ [J/g] | $\Delta H_1$-$\Delta H_2$ [J/g] |
|---|---|---|---|---|---|---|---|
| B1 | 1500 | 83,1 / 167,1 | 43,0 | 100,1 | 30 | 2 | 28 |
| B2 | 1540 | 167,5 | 44,0 | 101,0 | 38 | 3 | 35 |
| VB3 | 580 | 221,9 | 42,0 | 190,8 | 53 | 59 | 6 |
| B4 | - | 167,1 | 44,0 | 103,0 | 31 | 4 | 27 |
| B5 | - | 168,4 | 44,0 | 114,0 | 29 | 10 | 19 |
| B6 | 315 | 168,0 | 42,0 | 100,6 | 32 | 17 | 15 |
| B7 | 320 | 167,4 | 38,0 | 98,6 | 26 | 12 | 14 |

Die Sinterpulver der erfindungsgemäßen Beispiele B1, B2, B4, B5, B6 und B7 zeigen eine deutlich geringere Schmelztemperatur ($T_{M1}$) als das Sinterpulver des Vergleichsbeispiels VB3, wodurch die Sinterpulver der erfindungsgemäßen Beispiele B1, B2, B4, B5, B6 und B7 ohne Probleme in allen Standard-Lasersinteranlagen mit maximalen Bauraumtemperaturen von 200°C eingesetzt werden können. Ebenso zeichnen sich die Sinterpulver der erfindungsgemäßen Beispiele B1, B2, B4, B5, B6 und B7 durch eine sehr langsame Kristallisation im Vergleich zu dem Sinterpulver des Vergleichsbeispiels VB3 aus, was der Unterschied in den Schmelzenthalpien aus dem ersten und zweiten Heizlauf zeigt, und wodurch ein deutlich verbreitertes Sinterfenster erreicht wird.

Beim Vergleich der Beispiele B1 und B2 ist ersichtlich, dass bei B1 ein zusätzlicher, niedrig liegender Schmelzpeak (83,1 °C) auftritt. Dieser bewirkt eine Klebrigkeit im SLS-Prozess, was die Prozessfähigkeit (siehe Tabelle 7) des Sinterpulvers B1 verschlechtert. Eine Temperung (Beispiel B2) führt zum Verschwinden dieses niedrig liegenden Schmelzpeaks im ersten Heizlauf und zu einer verbesserten Prozessfähigkeit.

In den erfindungsgemäßen Beispielen B6 und B7 tritt dieser Peak nicht auf.

Lasersinterversuche

Das Sinterpulver wurde mit einer Schichtdicke von 0,1 mm in den Bauraum mit der in Tabelle 6 angegebenen Temperatur eingebracht. Anschließend wurde das Sinterpulver mit einem Laser mit der in Tabelle 6 angegebenen Laserleistung und dem angegebenen Punktabstand belichtet, wobei die Geschwindigkeit des Lasers über die Probe beim Belichten bei 15 m/s lag. Der Punktabstand wird auch als Laserabstand oder als Spurabstand bezeichnet. Beim selektiven Lasersintern erfolgt das Scannen üblicherweise in Streifen. Der Punktabstand gibt den Abstand zwischen den Mitten der Streifen, also zwischen den beiden Zentren des Laserstrahls zweier Streifen an.

Tabelle 6

| Beispiel / Vergleichsbeispiel | Temperatur [°C] | Laserleistung [W] | Lasergeschwindigkeit [m/s] | Punktabstand [mm] |
|---|---|---|---|---|
| B1 | 140 | 50 | 15 | 0,18 |

(fortgesetzt)

| Beispiel / Vergleichsbeispiel | Temperatur [°C] | Laserleistung [W] | Lasergeschwindigkeit [m/s] | Punktabstand [mm] |
|---|---|---|---|---|
| B2 | 135-155 | 50 | 15 | 0,18 |
| VB3 | 205 - 215 | 50 | 15 | 0,18 |
| B4 | 140 | 50 | 15 | 0,18 |
| B5 | 140 | 50 | 15 | 0,18 |

Es ist ersichtlich, dass die Temperatur, mit der das Sinterpulver der erfindungsgemäßen Beispiele B1 und B2 in den Bauraum eingebracht wurde, mit 25°C unterhalb der Schmelztemperatur sehr niedrig liegt im Vergleich zu der Temperatur, mit der das Sinterpulver des Vergleichsbeispiels VB3 in den Bauraum eingebracht wurde.

Anschließend wurden die Eigenschaften der erhaltenen Zugstäbe (Sinterstäbe) bestimmt. Die Prüfung der erhaltenen Zugstäbe (Sinterstäbe) erfolgte im trockenen Zustand nach Trocknung bei 80 °C für 336 h im Vakuum. Die Ergebnisse sind in Tabelle 7 gezeigt. Ferner wurden Charpy-Stäbe hergestellt, die ebenfalls trocken geprüft wurden (nach ISO179-2/1eU: 1997 + Amd.1:2011).

Die Prozessfähigkeit wurde qualitativ bewertet, wobei "2" "gut" bedeutet, also ein geringer Verzug des Bauteils und "5" "mangelhaft", also ein starker Verzug des Bauteils.

Die Zugfestigkeit, das Zug-E-Modul und die Bruchdehnung wurden gemäß ISO 527-1:2012 bestimmt.

Tabelle 7

| Beispiel / Vergleichs- beispiel | Prozessfähig- keit in SLS | Zugfestigkeit [MPa] | Zug-E-Modul [MPa] | Bruchdehnung [%] | Charpy Schlagzä- higkeit, ungekerbt [kJ/m²] | Charpy Schlagzä- higkeit, gekerbt [kJ/m²] |
|---|---|---|---|---|---|---|
| B1 | 3 | 45 | 2300 | 2,5 | n.b. | n.b. |
| B2 | 1 | 37 - 45 | 2300 - 2430 | 1,7 -2,5 | 9 - 12 | 2,2 ± 0,2 |
| VB3 | 6 | n.b.* | n.b.* | n.b.* | n.b.* | n.b.* |
| B4 | 1 | 42 ± 1,3 | 2850 ± 45 | 1,7 ± 0,1 | 7,4 ± 0,6 | 1,6 ± 0,3 |
| B5 | 1 | 45 ± 0,7 | 3740 ± 85 | 1,7 ± 0,1 | 13,1 ± 1,5 | 1,7 ± 0,2 |

\* Es wurden keine mechanisch prüfbaren Bauteile erhalten, da der Verzug zu groß war

Die aus den erfindungsgemäßen Sinterpulvern gemäß den Beispielen B1, B2, B4 und B5 hergestellten Formkörper weisen einen verringerten Verzug zusammen mit einem hohen Zug-E-Modul und einer hohen Zugfestigkeit auf. Mit der Zumischung eines Verstärkungsmittels (Komponente (D)) zu dem Sinterpulver (SP) (B4 und B5) kann nochmals eine weitere Erhöhung des Zug-E-Moduls und der Zugfestigkeit erreicht werden.

**Patentansprüche**

1. Sinterpulver (SP) enthaltend die nachfolgenden Komponenten (A) sowie gegebenenfalls (B), (C) und/oder (D):

(A) mindestens einen teilkristallinen Terephthalat-Polyester, der hergestellt wird durch Umsetzung mindestens der Komponenten (a) und (b):

(a) mindestens einer aromatischen Dicarbonsäure und
(b) mindestens zweier aliphatischer Diole (b1) und (b2), wobei das aliphatische Diol (b1) Neopentylglycol ist,

(B) gegebenenfalls mindestens ein weiteres Polymer,
(C) gegebenenfalls mindestens ein Additiv und/oder
(D) gegebenenfalls mindestens ein Verstärkungsmittel, wobei
das molare Verhältnis der Komponente (a) zu der Komponente (b1) bei der Herstellung des mindestens einen teilkristallinen Terephthalat-Polyesters (A) im Bereich von 1 : 0,15 bis 1 : 0,65 [mol/mol] liegt und das aliphatische Diol (b2) ein lineares Diol gemäß der allgemeinen Formel (I)

$$HO-(CH_2)_n-OH \qquad (I)$$

ist, in der n 2, 3, 4, 5 oder 6 bedeutet.

2. Sinterpulver (SP) gemäß Anspruch 1, **dadurch gekennzeichnet, dass** das molare Verhältnis der Komponente (a) zu der Komponente (b) bei der Herstellung des mindestens einen teilkristallinen Terephthalat-Polyesters (A) im Bereich von 1 : 0,8 bis 1 : 1,1 [mol/mol], bevorzugt im Bereich von 1 : 0,85 bis 1 : 1,05 [mol/mol], liegt.

3. Sinterpulver (SP) gemäß Anspruch 1 oder 2, **dadurch gekennzeichnet, dass** das molare Verhältnis der Komponente (a) zu der Komponente (b1) bei der Herstellung des mindestens einen teilkristallinen Terephthalat-Polyesters (A) im Bereich von 1 : 0,2 bis 1 : 0,5 [mol/mol] liegt.

4. Sinterpulver (SP) gemäß einem der Ansprüche 1 bis 3, **dadurch gekennzeichnet, dass** die Komponente (a) ausgewählt ist aus der Gruppe bestehend aus Terephthalsäure, Isophthalsäure und Phthalsäure.

5. Sinterpulver (SP) gemäß einem der Ansprüche 1 bis 4, **dadurch gekennzeichnet, dass** das Sinterpulver (SP)

   i) eine mittlere Partikelgröße (D50-Wert) im Bereich von 10 bis 250 $\mu$m aufweist, und/oder
   ii) einen D10-Wert im Bereich von 10 bis 60 $\mu$m,

      einen D50-Wert im Bereich von 25 bis 90 $\mu$m und
      einen D90-Wert im Bereich von 50 bis 150 $\mu$m aufweist, und/oder

   iii) getempert ist.

6. Sinterpulver (SP) gemäß einem der Ansprüche 1 bis 5, **dadurch gekennzeichnet, dass**

   i) die Komponente (B) ein Polymer ausgewählt aus der Gruppe bestehend aus Polyolefinen, Polyestern, Polyamiden, Polycarbonaten und Polyacrylaten, mehr bevorzugt aus Polyestern, Polycarbonaten und Polyacrylaten, ist, und/oder
   ii) die Komponente (C) ausgewählt ist aus Antinukleierungsmitteln, Schlagzähmodifizierern, Flammschutzmitteln, Stabilisatoren, leitfähigen Additiven, Endgruppenfunktionalisierern, Farbstoffen, Antioxidationsmitteln und Farbpigmenten, und/oder
   iii) die Komponente (D) ausgewählt ist aus der Gruppe bestehend aus Carbonnanotubes, Kohlenstofffasern, Borfasern, Glasfasern, Glaskugeln, Kieselsäurefasern, Keramikfasern, Basaltfasern, Aluminiumsilikaten, Aramidfasern und Polyesterfasern, bevorzugt aus Aluminiumsilikaten, Glasfasern, Glaskugeln, Kieselsäurefasern und Kohlenstofffasern, mehr bevorzugt aus Aluminiumsilikaten, Glasfasern, Glaskugeln und Kohlenstofffasern.

7. Sinterpulver (SP) gemäß einem der Ansprüche 1 bis 6, **dadurch gekennzeichnet, dass** das Sinterpulver (SP) eine Schmelztemperatur ($T_M$) im Bereich von 130 bis 210°C, bevorzugt im Bereich von 135 bis 205°C, mehr bevorzugt im Bereich von 140 bis 180°C, aufweist, wobei die Schmelztemperatur ($T_M$) mittels dynamischer Differenzkalorimetrie gemäß der Beschreibung bestimmt wird.

8. Sinterpulver (SP) gemäß einem der Ansprüche 1 bis 7, **dadurch gekennzeichnet, dass** das Sinterpulver (SP) eine Kristallisationstemperatur ($T_C$) im Bereich von 70 bis 130°C, bevorzugt im Bereich von 75 bis 125°C, mehr bevorzugt im Bereich von 80 bis 120°C, aufweist, wobei die Kristallisationstemperatur ($T_C$) mittels dynamischer Differenzkalorimetrie gemäß der Beschreibung bestimmt wird.

9. Sinterpulver (SP) gemäß einem der Ansprüche 1 bis 8, **dadurch gekennzeichnet, dass** das Sinterpulver (SP) eine erste Schmelzenthalpie $\Delta H1_{(SP)}$ und eine zweite Schmelzenthalpie $\Delta H2_{(SP)}$ aufweist, wobei die Differenz zwischen der ersten Schmelzenthalpie $\Delta H1_{(SP)}$ und der zweiten Schmelzenthalpie $\Delta H2_{(SP)}$ mindesten 10 J/g beträgt, wobei

die erste Schmelzenthalpie $\Delta H1_{(SP)}$ und die zweite Schmelzenthalpie $\Delta H2_{(SP)}$ mittels dynamischer Differenzkalorimetrie gemäß der Beschreibung bestimmt werden.

10. Verfahren zur Herstellung eines Sinterpulvers (SP) gemäß einem der Ansprüche 1 bis 9 umfassend die Schritte

a) Mischen der Komponenten (A) sowie gegebenenfalls (B), (C) und/oder (D):

(A) mindestens eines teilkristallinen Terephthalat-Polyesters, der hergestellt wird durch Umsetzung mindestens der Komponenten (a) und (b):

(a) mindestens einer aromatischen Dicarbonsäure und
(b) mindestens zweier aliphatischer Diole (b1) und (b2), wobei das aliphatische Diol (b1) Neopentylglycol ist,

(B) gegebenenfalls mindestens eines weiteren Polymers,
(C) gegebenenfalls mindestens eines Additivs und/oder
(D) gegebenenfalls mindestens eines Verstärkungsmittels,

in einem Extruder unter Erhalt eines Extrudats (E), das die Komponenten (A) sowie gegebenenfalls (B), (C) und/oder (D) enthält,
b) Pelletierung des in Schritt a) erhaltenen Extrudats (E) unter Erhalt eines Granulats (G), das die Komponenten (A) sowie gegebenenfalls (B), (C) und/oder (D) enthält,
c) Mikronisierung des in Schritt c) erhaltenen Granulats (G) unter Erhalt des Sinterpulvers (SP).

11. Verfahren gemäß Anspruch 10, **dadurch gekennzeichnet, dass** das in Schritt c) erhaltene Sinterpulver (SP) anschließend in einem Schritt d) bei einer Temperatur $T_T$ getempert wird unter Erhalt eines getemperten Sinterpulvers (SP).

12. Verfahren zur Herstellung eines Formkörpers umfassend die Schritte:

a) Bereitstellen einer Schicht eines Sinterpulvers (SP) gemäß einem der Ansprüche 1 bis 9,
b) gegebenenfalls Aufwärmen der Schicht bis maximal 2 K unterhalb der Schmelztemperatur $T_M$ des Sinterpulvers (SP), wobei die Schmelztemperatur $T_M$ mittels dynamischer Differenzkalorimetrie gemäß der Beschreibung bestimmt wird,
c) Belichten der in Schritt a) bereitgestellten oder gegebenenfalls der in Schritt b) erwärmten Schicht des Sinterpulvers (SP), bevorzugt in einem Sinterverfahren, mehr bevorzugt in einem selektiven Lasersinterverfahren, in einem High-Speed Sinter-Verfahren (HSS) oder einem Multijet-Fusion-Verfahren (MJF).

13. Formkörper erhältlich durch ein Verfahren gemäß Anspruch 12.

14. Verwendung eines Sinterpulvers (SP) gemäß einem der Ansprüche 1 bis 9 in einem Sinterverfahren, bevorzugt in einem selektiven Lasersinterverfahren, in einem High-Speed Sinter-Verfahren (HSS) oder einem Multijet-Fusion-Verfahren (MJF).

**Claims**

1. A sinter powder (SP) comprising the following components (A) and optionally (B), (C) and/or (D):

(A) at least one semicrystalline terephthalate polyester which is prepared by reacting at least components (a) and (b):

(a) at least one aromatic dicarboxylic acid and
(b) at least two aliphatic diols (b1) and (b2), where the aliphatic diol (b1) is neopentyl glycol,

(B) optionally at least one further polymer,
(C) optionally at least one additive and/or
(D) optionally at least one reinforcer, where the molar ratio of component (a) to component (b1) in the preparation of the at least one semicrystalline terephthalate polyester (A) is in the range from 1:0.15 to 1:0.65 [mol/mol] and the aliphatic diol (b2) is a linear diol of the general formula (I)

$$HO-(CH_2)_n-OH \qquad (I)$$

in which n is 2, 3, 4, 5 or 6.

2. The sinter powder (SP) according to claim 1, wherein the molar ratio of component (a) to component (b) in the preparation of the at least one semicrystalline terephthalate polyester (A) is in the range from 1:0.8 to 1:1.1 [mol/mol], preferably in the range from 1:0.85 to 1:1.05 [mol/mol].

3. The sinter powder (SP) according to claim 1 or 2, wherein the molar ratio of component (a) to component (b1) in the preparation of the at least one semicrystalline terephthalate polyester (A) is in the range from 1:0.2 to 1:0.5 [mol/mol].

4. The sinter powder (SP) according to any of claims 1 to 3, wherein component (a) is selected from the group consisting of terephthalic acid, isophthalic acid and phthalic acid.

5. The sinter powder (SP) according to any of claims 1 to 4, wherein the sinter powder (SP) has

    i) a median particle size (D50) in the range from 10 to 250 $\mu$m, and/or
    ii) a D10 in the range from 10 to 60 $\mu$m,

        a D50 in the range from 25 to 90 $\mu$m and
        a D90 in the range from 50 to 150 $\mu$m, and/or

    iii) has been heat treated.

6. The sinter powder (SP) according to any of claims 1 to 5, wherein

    i) component (B) is a polymer selected from the group consisting of polyolefins, polyesters, polyamides, polycarbonates and polyacrylates, more preferably from polyesters, polycarbonates and polyacrylates, and/or
    ii) component (C) is selected from antinucleating agents, impact modifiers, flame retardants, stabilizers, conductive additives, end group functionalizers, dyes, antioxidants and color pigments, and/or
    iii) component (D) is selected from the group consisting of carbon nanotubes, carbon fibers, boron fibers, glass fibers, glass beads, silica fibers, ceramic fibers, basalt fibers, aluminum silicates, aramid fibers and polyester fibers, preferably from aluminum silicates, glass fibers, glass beads, silica fibers and carbon fibers, more preferably from aluminum silicates, glass fibers, glass beads and carbon fibers.

7. The sinter powder (SP) according to any of claims 1 to 6, wherein the sinter powder (SP) has a melting temperature ($T_M$) in the range from 130 to 210°C, preferably in the range from 135 to 205°C, more preferably in the range from 140 to 180°C, where the melting temperature ($T_M$) is determined by dynamic scanning calorimetry according to the description.

8. The sinter powder (SP) according to any of claims 1 to 7, wherein the sinter powder (SP) has a crystallization temperature ($T_C$) in the range from 70 to 130°C, preferably in the range from 75 to 125°C, more preferably in the range from 80 to 120°C, where the crystallization temperature ($T_C$) is determined by dynamic scanning calorimetry according to the description.

9. The sinter powder according to any of claims 1 to 8, wherein the sinter powder (SP) has a first enthalpy of fusion $\Delta H1_{(SP)}$ and a second enthalpy of fusion $\Delta H2_{(SP)}$, where the difference between the first enthalpy of fusion $\Delta H1_{(SP)}$ and the second enthalpy of fusion $\Delta H2_{(SP)}$ is at least 10 J/g, where the first enthalpy of fusion $\Delta H1_{(SP)}$ and the second enthalpy of fusion $\Delta H2_{(SP)}$ are determined by dynamic scanning calorimetry according to the description.

10. A method of producing a sinter powder (SP) according to any of claims 1 to 9, comprising the steps of

    a) mixing components (A) and optionally (B), (C) and/or (D) :

(A) at least one semicrystalline terephthalate polyester which is prepared by reacting at least components (a) and (b):

(a) at least one aromatic dicarboxylic acid and
(b) at least two aliphatic diols (b1) and (b2), where the aliphatic diol (b1) is neopentyl glycol,

(B) optionally at least one further polymer,
(C) optionally at least one additive and/or
(D) optionally at least one reinforcer,

in an extruder to obtain an extrudate (E) comprising components (A) and optionally (B), (C) and/or (D),
b) pelletizing the extrudate (E) obtained in step a) to obtain a pelletized material (G) comprising components (A) and optionally (B), (C) and/or (D),
c) micronizing the pelletized material (G) obtained in step c) to obtain the sinter powder (SP).

11. The method according to claim 10, wherein the sinter powder (SP) obtained in step c) is then heat-treated in a step d) at a temperature $T_T$ to obtain a heat-treated sinter powder (SP).

12. A method of producing a shaped body, comprising the steps of:

a) providing a layer of a sinter powder (SP) according to any of claims 1 to 9,
b) optionally heating the layer up to a maximum of 2 K below the melting temperature $T_M$ of the sinter powder (SP), where the melting temperature $T_M$ is determined by means of dynamic scanning calorimetry according to the description,
c) exposing the layer of the sinter powder (SP) provided in step a) or optionally heated in step b), preferably in a sintering method, more preferably in a selective laser sintering method, in a high-speed sintering (HSS) method or a multijet fusion (MJF) method.

13. A shaped body obtainable by a method according to claim 12.

14. The use of a sinter powder (SP) according to any of claims 1 to 9 in a sintering method, preferably in a selective laser sintering method, in a high-speed sintering (HSS) method or a multijet fusion (MJF) method.

**Revendications**

1. Poudre frittée (SP) contenant les composants (A) ci-après, ainsi qu'éventuellement (B), (C) et/ou (D) :

(A) au moins un polyester de téréphtalate partiellement cristallin, qui est fabriqué par réaction d'au moins les composants (a) et (b) :

(a) au moins un acide dicarboxylique aromatique et
(b) au moins deux diols aliphatiques (b1) et (b2), le diol aliphatique (b1) étant le néopentylglycol,

(B) éventuellement au moins un autre polymère,
(C) éventuellement au moins un additif et/ou
(D) éventuellement au moins un renforçateur,
le rapport en moles du composant (a) au composant (b1) lors de la fabrication de l'au moins un polyester de téréphtalate partiellement cristallin (A) étant compris dans la plage de 1:0,15 à 1:0,65 [mol/mol], et le diol aliphatique (b2) étant un diol linéaire de Formule (I)

$$HO\text{-}(CH_2)_n\text{-}OH \qquad (I)$$

dans laquelle n représente 2, 3, 4, 5 ou 6.

2. Poudre frittée (SP) selon la revendication 1, **caractérisée en ce que** le rapport en moles du composant (a) au composant (b) lors de la fabrication de l'au moins un polyester de téréphtalate partiellement cristallin (A) est compris dans la plage de 1:0,8 à 1:1 [mol/mol], de préférence dans la plage de 1:0,85 à 1:1,05 [mol/mol].

**3.** Poudre frittée (SP) selon la revendication 1 ou 2, **caractérisée en ce que** le rapport en moles du composant (a) au composant (b1) lors de la fabrication de l'au moins un polyester de téréphtalate partiellement cristallin (A) est compris dans la plage de 1:0,2 à 1:0,5 [mol/mol].

**4.** Poudre frittée (SP) selon l'une des revendications 1 à 3, **caractérisée en ce que** le composant (a) est choisi dans le groupe consistant en l'acide téréphtalique, l'acide isophtalique et l'acide phtalique.

**5.** Poudre frittée (SP) selon l'une des revendications 1 à 4, **caractérisée en ce que** la poudre frittée (SP)

   i) présente une granulométrie moyenne (D50) dans la plage de 10 à 250 $\mu$m, et/ou
   ii) présente une D10 dans la plage de 10 à 60 $\mu$m,

      une D50 dans la plage de 25 à 90 $\mu$m et
      une D90 dans la plage de 50 à 150 $\mu$m, et/ou

   iii) est recuite.

**6.** Poudre frittée (SP) selon l'une des revendications 1 à 5, **caractérisée en ce que**

   i) le composant (B) est un polymère choisi dans le groupe consistant en les polyoléfines, les polyesters, les polyamides, les polycarbonates et les polyacrylates, plus préférentiellement les polyesters, les polycarbonates et les polyacrylates, et/ou
   ii) le composant (C) est choisi parmi les agents anti-nucléation, les modifiants chocs, les retardateurs de flamme, les stabilisants, les additifs conducteurs, les agents de fonctionnalisation des groupes terminaux, les colorants, les antioxydants et les pigments colorés, et/ou
   iii) le composant (D) est choisi dans le groupe consistant en les nanotubes de carbone, les fibres de carbone, les fibres de bore, les fibres de verre, les billes de verre, les fibres de silice, les fibres céramiques, les fibres de basalte, les silicates d'aluminium, les fibres aramides et les fibres de polyester, de préférence les silicates d'aluminium, les fibres de verre, les billes de verre, les fibres de silice et les fibres de carbone, plus préférentiellement les silicates d'aluminium, les fibres de verre, les billes de verre et les fibres de carbone.

**7.** Poudre frittée (SP) selon l'une des revendications 1 à 6, **caractérisée en ce que** la poudre frittée (SP) présente une température de fusion ($T_M$) dans la plage de 130 à 210 °C, de préférence dans la plage de 135 à 205 °C, plus préférentiellement dans la plage de 140 à 180 °C, la température de fusion ($T_M$) étant déterminée par analyse calorimétrique différentielle dynamique selon la description.

**8.** Poudre frittée (SP) selon l'une des revendications 1 à 7, **caractérisée en ce que** la poudre frittée (SP) présente une température de cristallisation ($T_C$) dans la plage de 70 à 130 °C, de préférence dans la plage de 75 à 125 °C, plus préférentiellement dans la plage de 80 à 120 °C, la température de cristallisation ($T_C$) étant déterminée par analyse calorimétrique différentielle dynamique selon la description.

**9.** Poudre frittée (SP) selon l'une des revendications 1 à 8, **caractérisée en ce que** la poudre frittée (SP) présente une première enthalpie de fusion $\Delta H1_{(SP)}$ et une deuxième enthalpie de fusion $\Delta H2_{(SP)}$, la différence entre la première enthalpie de fusion $\Delta H1_{(SP)}$ et la deuxième enthalpie de fusion $\Delta H2_{(SP)}$ étant d'au moins 10 J/g, la première enthalpie de fusion $\Delta H1_{(SP)}$ et la deuxième enthalpie de fusion $\Delta H2_{(SP)}$ étant déterminées par analyse calorimétrique différentielle dynamique selon la description.

**10.** Procédé de fabrication d'une poudre frittée (SP) selon l'une des revendications 1 à 9, comprenant les étapes suivantes

   a) mélange des composants (A), ainsi qu'éventuellement (B), (C) et/ou (D) :

      (A) d'au moins un polyester de téréphtalate partiellement cristallin, qui est fabriqué par réaction d'au moins les composants (a) et (b) :

         (a) au moins un acide dicarboxylique aromatique et
         (b) au moins deux diols aliphatiques (b1) et (b2), le diol aliphatique (b1) étant le néopentylglycol,

(B) éventuellement d'au moins un autre polymère,

(C) éventuellement d'au moins un additif et/ou

(D) éventuellement d'au moins un agent renforçateur,

dans une extrudeuse avec obtention d'un extrudat (E), qui contient les composants (A) ainsi qu'éventuellement (B), (C) et/ou (D),

b) pastillage de l'extrudat (E) obtenu dans l'étape a) avec obtention d'un granulé (G), qui contient les composants (A) ainsi qu'éventuellement (B), (C) et/ou (D),

c) micronisation du granulé (G) obtenu dans l'étape c) avec obtention de la poudre frittée (SP).

11. Procédé selon la revendication 10, **caractérisé en ce que** la poudre frittée (SP) obtenue dans l'étape c) est ensuite recuite dans une étape d) à une température $T_T$ avec obtention d'une poudre frittée (SP) recuite.

12. Procédé de fabrication d'un objet moulé, comprenant les étapes suivantes :

a) fourniture d'une couche d'une poudre frittée (SP) selon l'une des revendications 1 à 9,

b) éventuellement chauffage de la couche jusqu'à un maximum de 2 K en dessous de la température de fusion TM de la poudre frittée (SP), la température de fusion TM étant déterminée par analyse calorimétrique différentielle dynamique selon la description,

c) irradiation de la couche de la poudre frittée (SP) fournie dans l'étape a) ou éventuellement chauffée dans l'étape b), de préférence dans un procédé de frittage, plus préférentiellement dans un procédé sélectif de frittage laser, dans un procédé de frittage à grande vitesse (HSS) ou dans un procédé de fusion multijet (MJF).

13. Objet moulé pouvant être obtenu par un procédé selon la revendication 12.

14. Utilisation d'une poudre frittée (SP) selon l'une des revendications 1 à 9 dans un procédé de frittage, de préférence dans un procédé sélectif de frittage laser, dans un procédé de frittage à grande vitesse (HSS) ou dans un procédé de fusion multijet (MJF).

**Figur 1**

**IN DER BESCHREIBUNG AUFGEFÜHRTE DOKUMENTE**

**In der Beschreibung aufgeführte Patentdokumente**

- US 6136948 A
- WO 9606881 A
- US 20150259530 A
- US 8247492 B
- WO 2019177850 A

**In der Beschreibung aufgeführte Nicht-Patentliteratur**

- **ROB G. KLEIJNEN ; MANFRED SCHMID ; KONRAD WEGENER.** Production and Processing of a spherical polybutylene terephthalate powder for laser sintering. *Applied Sciences,* 2019, vol. 9, 1308
- **S. ARAI et al.** Comparison of crystallization characteristics and mechanical properties of poly(butylene terephthalate) processed by laser sintering and injection molding. *Materials and Design,* 2017, vol. 113, 214